# EUROPEAN PATENT SPECIFICATION

(11) **EP 3 958 643 B1**
(45) Date of publication and mention of the grant of the patent: **02.10.2024**
(21) Application number: 20823088.8
(22) Date of filing: 28.05.2020
(51) Int. Cl.: H04W 76/10, H04W 76/12, H04W 40/24, H04W 76/22, H04W 40/02

(54) **COMMUNICATION METHOD, DEVICE, AND SYSTEM**
KOMMUNIKATIONSVERFAHREN, -VORRICHTUNG UND -SYSTEM
PROCÉDÉ, DISPOSITIF ET SYSTÈME DE COMMUNICATION

(30) Priority: 13.06.2019 CN 201910512037
(43) Date of publication of application: 23.02.2022
(73) Proprietor: Huawei Technologies Co., Ltd., Shenzhen, Guangdong 518129 (CN)
(72) Inventor: DING, Hui, Shenzhen, Guangdong 518129 (CN)
(74) Representative: Körber, Martin Hans
(86) International application number: PCT/CN2020/093012
(87) International publication number: WO 2020/248828

(56) References cited:
- EP-A1- 3 691 380
- EP-A1- 3 737 197
- EP-A1- 3 777 305
- EP-A1- 3 857 976
- EP-A1- 3 984 300
- EP-B1- 3 777 305
- WO-A1-2019/076167
- WO-A1-2019/192692
- WO-A1-2020/064125
- CN-A- 101 616 143
- CN-A- 108 347 336
- NOKIA; NOKIA SHANGHAI BELL: "Providing background data transfer policies to a UE", 3GPP DRAFT; S2-1903324_23502_SOLUTION ON PROVIDING BACKGROUND DATA TRANSFER POLICIES TO A UE, vol. SA WG2, 2 April 2019 (2019-04-02), Xian, P.R.China, pages 1 - 17, XP051719487
- ANONYMOUS: "3rd Generation Partnership Project; Technical Specification Group Services and System Aspects; Policy and Charging Control Framework for the 5G System; Stage 2 (Release 16)", 3RD GENERATION PARTNERSHIP PROJECT; TECHNICAL SPECIFICATION GROUP SERVICES AND SYSTEM ASPECTS; POLICY AND CHARGING CONTROL FRAMEWORK FOR THE 5G SYSTEM; STAGE 2 (RELEASE 16), vol. SA WG2, no. V16.1.0, 11 June 2020 (2020-06-11), pages 1 - 99, XP051719487

## Description

### TECHNICAL FIELD

This application relates to the communication field, and in particular, to a communications method, an apparatus, and a system.

### BACKGROUND

In a current 5th generation (5th generation, 5G) communications system, when a terminal determines that a service or an application needs to be initiated, the terminal may search for traffic descriptor information in a received user route selection policy (user equipment route selection policy, URSP) rule through matching, use, as a protocol data unit (protocol data unit, PDU) session parameter, a data network name (data network name, DNN) and single network slice selection assistance information (single network slice selection assistance information, S-NSSAI) that are indicated by a URSP rule that is successfully found through matching, for example, a DNN 1 and S-NSSAI 1, and initiate a PDU session establishment/modification request (PDU session establishment/modification request) message to a session management function (session management function, SMF) network element. Correspondingly, the SMF network element may check the URSP rule, and execute a policy action according to a policy rule formulated by a policy control function (policy control function, PCF) network element connected to the SMF network element. If the check succeeds, the SMF network element accepts the PDU session establishment/modification request message, and sends a session management policy control association establishment/modification request (session management policy control association establishment/modification request) message to the PCF network element, to request the PCF network element to formulate the policy rule for the terminal, for example, a policy and charging control (policy and charging control, PCC) rule, a subscription event, and a PDU session policy. If the check fails, the SMF network element rejects the PDU session establishment/modification request message, and returns, to the terminal, a PDU session establishment/modification response that carries a rejection indication and a cause value.

However, a PCF network element used for mobility management (mobility management, AM) (briefly referred to as an AM-PCF below) and a PCF network element used for session management (session management, SM) (briefly referred to as an SM-PCF below) may be different PCF network elements. In addition, to obtain better quality of service, the terminal may select other S-NSSAI with better guaranteed quality of service, for example, S-NSSAI 2, to initiate the PDU session establishment/modification request, which does not follow a URSP rule received by the terminal. Because the PDU session establishment/modification request message initiated by the terminal does not carry specific application/service information, or the URSP rule on which the PDU session establishment/modification request initiated by the terminal is based, the SMF network element cannot check a changed PDU session parameter, for example, the S-NSSAI 2. In other words, the SMF network element cannot determine whether the changed PDU session parameter is proper. Consequently, the SMF network element cannot perform PDU session admission control according to the URSP rule, and a PDU session establishment/modification procedure does not follow a URSP rule delivered by a network side.
The document EP 3 737 197 A1 shows a core network providing policy information and comprising session management function, SMF, and an access and mobility management function, AMF, and a policy control function, PCF. A wireless device establishes a PDU session by messaging with the AMF. The wireless device sends a PDU session establishment request to the AMF, the AMF sends a message to the SMF, and the SMF sends a policy association establishment modification request to the PCF. The PCF sends to the wireless device the policy information comprising an access network discovery and selection policy, ANDSP, and/or a UE Route Selection Policy, URSP. The documents EP 3 691 389 A1 and WO 2019/076167 A1 show a system comprising a terminal device, a network device, and a core network device being a session management function, SMF, and an access and mobility management function, AMF. The terminal device sends an establishment request or modification message of a first protocol data unit PDU session to the SMF device, and the SMF responds to the UE. A network device receives the first request message sent by the terminal device and sends a response message to the terminal device feeding back a session establishment status so that the terminal device adjusts a session establishment policy. The network device delivers a URSP policy to the terminal device through a policy control function, PCF, or is the PCF.
The documents EP 3 777 305 A1 and WO 2019192692 A1 show a mobile core network including multiple network slices, each slice including user plane function, control plane functions, such as a session management function, SMF and a policy control function, PCF, and network functions shared by the network slices, such as an access and mobility management function, AMF. A UE establishes a first PDU session with a first network slice, the first network slice including a first SMF/UPF and a first PCF, and the UE establishes a second PDU session with a second network slice including a second SMF/UPF and a second SMF/UPF.
The documents EP 3 857 305 A1 and WO 2020064125 A1 show mobile core network 140 also includes multiple control plane functions including, but not limited to, an access and mobility management Function SMF, a session management function, SMF, and a policy control function, PCF ([0048]). The PCF selects a URSP based on the OS identity parameter, and a UE then stores the URSP.

### SUMMARY

Embodiments of this application provide a communications method, apparatus, and system, to resolve a problem that because an SMF network element cannot perceive a URSP rule on which a PDU session establishment/modification request message initiated by a terminal is based, whether the PDU session establishment/modification request initiated by the terminal follows the URSP rule cannot be checked. Therefore, a capability of controlling admission of terminal behavior by a network side can be improved.

To achieve the foregoing objectives, the following technical solutions are used in this application. In the following, parts of the description and drawings referring to embodiments which are not covered by the claims are not presented as embodiments of the invention, but as examples useful for understanding the invention.

According to a first aspect, a communications method is provided. The communications method includes: A mobility management network element receives a first session request message from a terminal. The first session request message carries user route selection policy (URSP) identification information. Then, the mobility management network element obtains URSP policy information based on the URSP identification information from a first policy control entity. Then, the mobility management network element sends a second session request message to a session management network element. The second session request message carries the URSP policy information, and the URSP policy information is to be used to formulate a policy rule for the terminal by a second policy control entity.

According to the communications method provided in the first aspect, the mobility management network element can obtain the corresponding URSP policy information based on the URSP identification information carried in the first session request message from the terminal, and send, to the session management network element, the second session request message that carries the URSP policy information, so that the session management network element checks, based on the URSP policy information, a URSP rule carried in a session request message initiated by the terminal, to avoid a problem that in a scenario in which an SM-PCF network element and an AM-PCF network element are different PCF network elements, when the terminal initiates the session request message by selecting other route selection descriptor (RSD) information with better quality of service, instead of using route selection descriptor (RSD) information configured in a network, because the session management network element cannot perceive a URSP rule on which a PDU session establishment/modification request message initiated by the terminal is based, whether the PDU session establishment/modification request initiated by the terminal follows the URSP rule cannot be checked. Therefore, a capability of controlling admission of terminal behavior by a network side can be improved.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

Further, the second session request message may further carry the URSP identification information, so that the session management network element determines, based on the URSP identification information, whether the URSP policy information carried in the second session request message is incorrect.

According to a second aspect, a communications method is provided. The communications method includes: A session management network element receives a second session request message from a mobility management network element. The second session request message carries URSP policy information. Then, the session management network element determines, based on the URSP policy information, to accept the second session request message, and sends a policy control request message to a second policy control entity. The policy control request message carries the URSP policy information, and the URSP policy information is to be used to formulate a policy rule for a terminal by the second policy control entity.

The URSP policy information may include one or more of the following: traffic descriptor information and one or more pieces of route selection descriptor (RSD) information corresponding to the traffic descriptor information.

In a possible design method, the second session request message may further carry session configuration information. Correspondingly, that the session management network element determines, based on the URSP policy information, to accept the second session request message may include: The session management network element determines that the session configuration information matches the URSP policy information.

In a possible design method, the communications method in the second aspect may further include: The session management network element receives a policy control response message from the second policy control entity. The policy control response message carries the policy rule.

Further, the second session request message further carries URSP identification information, so that the session management network element determines, based on the URSP identification information, whether the URSP policy information carried in the second session request message is incorrect. For example, the URSP identification information may include one or more of the following: a URSP rule identifier, traffic descriptor information, a data network name (DNN), single network slice selection assistance information (S-NSSAI), a session and service continuity (SSC) mode, a session type, and an access type.

It should be noted that, for technical effects of the communications method in the second aspect, refer to the technical effects of the communications method in the first aspect. Details are not described herein again.

According to a third aspect, a communications method is provided. The communications method includes: A mobility management network element obtains URSP policy information from a first policy control entity based on user route selection policy (URSP) identification information, and sends a second session request message to a session management network element. The URSP identification information is carried in a first session request message from a terminal, and the second session request message carries the URSP policy information. Then, the session management network element receives the second session request message, and sends a policy control request message to a second policy control entity. The policy control request message carries the URSP policy information, and the URSP policy information is to be used to formulate a policy rule for the terminal by a second policy control entity.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier. Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

In a possible design method, before the session management network element sends the policy control request message to the second policy control entity, the communications method in the third aspect may further include: The session management network element determines, based on the URSP policy information, to accept the second session request message.

For example, the second session request message further carries session configuration information. Correspondingly, that the session management network element determines, based on the URSP policy information, to accept the second session request message may include: The session management network element determines that the session configuration information matches the URSP policy information.

In a possible design method, the communications method in the third aspect may further include: The session management network element receives a policy control response message from the second policy control entity. The policy control response message carries the policy rule.

It should be noted that, for technical effects of the communications method in the third aspect, refer to the technical effects of the communications method in the first aspect. Details are not described herein again.

According to a fourth aspect, a communications apparatus is provided. The communications apparatus includes a processing module and a transceiver module. The transceiver module is configured to receive a first session request message from a terminal. The first session request message carries user route selection policy (URSP) identification information. The processing module is configured to obtain URSP policy information from a first policy control entity based on the URSP identification information. The transceiver module is further configured to send a second session request message to a session management network element. The second session request message carries the URSP policy information, and the URSP policy information is to be used to formulate a policy rule for the terminal by a second policy control entity.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

In a possible design, the processing module is further configured to control, based on the URSP identification information, the transceiver module to obtain the URSP policy information from a first policy control entity. Alternatively, optionally, the processing module is further configured to obtain the URSP policy information from a local cache of a mobility management network element based on the URSP identification information.

Further, the second session request message may further carry the URSP identification information, so that the session management network element determines, based on the URSP identification information, whether the URSP policy information carried in the second session request message is incorrect.

Optionally, the communications apparatus according to the fourth aspect may further include a memory. The storage module stores a program or instructions. When the processing module executes the program or the instructions, the communications apparatus in the fourth aspect performs a function of the mobility management network element in the communications method according to any possible implementation of the first aspect to the third aspect.

It should be noted that the communications apparatus in the fourth aspect may be a mobility management network element, or may be a chip or a chip system disposed in the mobility management network element. This is not limited in this application.

In addition, for technical effects of the communications apparatus in the fourth aspect, refer to technical effects of the communications method in the first aspect. Details are not described herein again.

According to a fifth aspect, a communications apparatus is provided. The communications apparatus includes a processing module and a transceiver module. The transceiver module is configured to receive a second session request message from a mobility management network element. The second session request message carries URSP policy information. The processing module is configured to determine, based on the URSP policy information, to accept the second session request message. The transceiver module is further configured to send a policy control request message to a second policy control entity. The policy control request message carries the URSP policy information, and the URSP policy information is to be used to formulate a policy rule for a terminal by the second policy control entity.

The URSP policy information may include one or more of the following: traffic descriptor information and one or more pieces of route selection descriptor (RSD) information corresponding to the traffic descriptor information.

In a possible design, the second session request message may further carry session configuration information. Correspondingly, the processing module is further configured to determine that the session configuration information matches the URSP policy information.

In a possible design, the transceiver module is further configured to receive a policy control response message from the second policy control entity. The policy control response message carries the policy rule.

Further, the second session request message further carries URSP identification information, so that a session management network element determines, based on the URSP identification information, whether the URSP policy information carried in the second session request message is incorrect. For example, the URSP identification information may include one or more of the following: a URSP rule identifier, traffic descriptor information, a data network name (DNN), single network slice selection assistance information (S-NSSAI), a session and service continuity (SSC) mode, a session type, and an access type.

Optionally, the communications apparatus in the fifth aspect may further include a memory. The storage module stores a program or instructions. When the processing module executes the program or the instructions, the communications apparatus in the fifth aspect performs a function of the session management network element in the communications method according to any possible implementation of the first aspect to the third aspect.

It should be noted that the communications apparatus in the fifth aspect may be a session management network element, or may be a chip or a chip system disposed in the session management network element. This is not limited in this application.

In addition, for technical effects of the communications apparatus in the fifth aspect, refer to technical effects of the communications method in the first aspect. Details are not described herein again.

According to a sixth aspect, a communications system is provided. The communications system includes a mobility management network element and a session management network element. The mobility management network element is configured to: obtain URSP policy information based on user route selection policy (URSP) identification information from a first policy control entity, and send a second session request message to the session management network element. The URSP identification information is carried in a first session request message from a terminal, and the second session request message carries the URSP policy information. The session management network element is configured to: receive the second session request message, and send a policy control request message to a second policy control entity. The policy control request message carries the URSP policy information, and the URSP policy information is used to formulate a policy rule for the terminal by the second policy control entity.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

In a possible design, the session management network element is further configured to: before sending a policy control request message to a second policy control entity, determine, based on the URSP policy information, to accept the second session request message.

For example, the second session request message further carries session configuration information. Correspondingly, the session management network element is further configured to determine that the session configuration information matches the URSP policy information.

In a possible design, the session management network element is further configured to receive a policy control response message from the second policy control entity. The policy control response message carries the policy rule.

For example, the communications system in the sixth aspect may include the mobility management network element and the session management network element. The mobility management network element may be configured to perform a function of the mobility management network element in the communications method according to any possible implementation of the first aspect to the third aspect. The session management network element may be configured to perform a function of the session management network element in the communications method according to any possible implementation of the first aspect to the third aspect.

It should be noted that, the communications system in the sixth aspect may further include another network element, a network device, or a network entity, for example, the second policy control entity. This is not limited in this application.

In addition, for technical effects of the communications system in the sixth aspect, refer to technical effects of the communications method in the first aspect. Details are not described herein again.

According to a seventh aspect, a communications method is provided. The communications method includes: A session management network element sends a policy control request message to a second policy control entity. The policy control request message carries URSP identification information. Correspondingly, the second policy control entity receives the policy control request message from the session management network element, and obtains URSP policy information based on the URSP identification information. The URSP policy information is used to formulate a policy rule for a terminal. Then, the second policy control entity sends a policy control response message to the session management network element. The policy control response message carries the policy rule. Then, the session management network element receives the policy control response message from the second policy control entity.

In the communications method provided in the seventh aspect, the second policy control entity can obtain the corresponding URSP policy information based on the URSP identification information carried in the policy control request message from the session management network element, and check, based on the URSP policy information, a URSP rule used for a session request message initiated by the terminal, to avoid a problem that in a scenario in which an SM-PCF network element and an AM-PCF network element are different PCF network elements, when the terminal initiates the session request message by selecting other route selection descriptor (RSD) information with better quality of service, instead of using route selection descriptor (RSD) information configured in a network, because a policy control entity or the session management network element cannot perceive a URSP rule on which a PDU session establishment/modification request message initiated by the terminal is based, whether the PDU session establishment/modification request initiated by the terminal follows the URSP rule cannot be checked. Therefore, a capability of controlling admission of terminal behavior by a network side can be improved.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier. Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

In a possible design method, that the second policy control entity obtains the URSP policy information based on the URSP identification information may include any one of the following: The second policy control entity obtains the URSP policy information from a first policy control entity based on the URSP identification information; and the second policy control entity obtains the URSP policy information from a network storage network element based on the URSP identification information.

In a possible design method, before the second policy control entity obtains the URSP policy information from the first policy control entity based on the URSP identification information, the communications method in the seventh aspect may further include one of the following: The second policy control entity obtains identification information of the first policy control entity from the session management network element; and the second policy control entity obtains the identification information of the first policy control entity from a binding support network element.

In a possible design method, before the second policy control entity sends the policy control response message to the session management network element, the communications method in the seventh aspect may further include: The second policy control entity determines, based on the URSP policy information, to accept the policy control request message.

Optionally, the policy control request message may further carry session configuration information. Correspondingly, that the second policy control entity determines, based on the URSP policy information, to accept the policy control request message may include: The second policy control entity determines that the session configuration information matches the URSP policy information.

According to an eighth aspect, a communications method is provided. The communications method includes: A second policy control entity receives a policy control request message from a session management network element. The policy control request message carries URSP identification information. Then, the second policy control entity obtains URSP policy information based on the URSP identification information. The URSP policy information is used to formulate a policy rule for a terminal. Then, the second policy control entity sends a policy control response message to the session management network element. The policy control response message carries the policy rule.

In a possible design method, that the second policy control entity obtains the URSP policy information based on the URSP identification information may include any one of the following: The second policy control entity obtains the URSP policy information from a first policy control entity based on the URSP identification information; and the second policy control entity obtains the URSP policy information from a network storage network element based on the URSP identification information.

In a possible design method, before the second policy control entity obtains the URSP policy information from the first policy control entity based on the URSP identification information, the communications method in the eighth aspect may further include one of the following: The second policy control entity obtains identification information of the first policy control entity from the session management network element; and the second policy control entity obtains the identification information of the first policy control entity from a binding support network element.

In a possible design method, before the second policy control entity sends the policy control response message to the session management network element, the communications method in the eighth aspect may further include: The second policy control entity determines, based on the URSP policy information, to accept the policy control request message.

Optionally, the policy control request message may further carry session configuration information. Correspondingly, that the second policy control entity determines, based on the URSP policy information, to accept the policy control request message may include: The second policy control entity determines that the session configuration information matches the URSP policy information.

It should be noted that, for technical effects of the communications method in the eighth aspect, refer to the technical effects of the communications method in the seventh aspect. Details are not described herein again.

According to a ninth aspect, a communications system is provided. The communications system includes a second policy control entity and a session management network element. The session management network element is configured to send a policy control request message to the second policy control entity. The policy control request message carries URSP identification information. The second policy control entity is configured to: receive the policy control request message from the session management network element, and obtain URSP policy information based on the URSP identification information. The URSP policy information is used to formulate a policy rule for a terminal. The second policy control entity is further configured to send a policy control response message to the session management network element. The policy control response message carries the policy rule. The session management network element is further configured to receive the policy control response message from the second policy control entity.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier. Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

In a possible design, the second policy control entity is further configured to obtain the URSP policy information from a first policy control entity based on the URSP identification information. Alternatively, optionally, the second policy control entity is further configured to obtain the URSP policy information from a network storage network element based on the URSP identification information.

In a possible design, the second policy control entity is further configured to obtain identification information of the first policy control entity from the session management network element before obtaining the URSP policy information from the first policy control entity based on the URSP identification information. Alternatively, optionally, the second policy control entity is further configured to obtain identification information of the first policy control entity from a binding support network element before obtaining the URSP policy information from the first policy control entity based on the URSP identification information.

In a possible design, the second policy control entity is further configured to: before sending the policy control response message to the session management network element, determine, based on the URSP policy information, to accept the policy control request message.

Further, the policy control request message may further carry session configuration information. Correspondingly, the second policy control entity is further configured to determine that the session configuration information matches the URSP policy information.

For example, the communications system in the ninth aspect may include the session management network element and the second policy control entity. The session management network element may be configured to perform a function of the session management network element in the communications method according to any possible implementation of the seventh aspect and the eighth aspect. The second policy control entity may be configured to perform a function of the second policy control entity in the communications method according to any possible implementation of the seventh aspect and the eighth aspect.

It should be noted that the communications system in the ninth aspect may further include another network element, a network device, or a network entity, for example, a mobility management network element. This is not limited in this application.

In addition, for a technical effect of the communications system in the ninth aspect, refer to the technical effect of the communications method in the seventh aspect. Details are not described herein again.

According to a tenth aspect, a communications apparatus is provided. The communications apparatus includes a processing module and a transceiver module. The transceiver module is configured to receive a policy control request message from a session management network element. The policy control request message carries URSP identification information. The processing module is configured to obtain URSP policy information based on the URSP identification information. The URSP policy information is used to formulate a policy rule for a terminal. The transceiver module is further configured to send a policy control response message to the session management network element. The policy control response message carries the policy rule.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier. Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

In a possible design, the processing module is further configured to control, based on the URSP identification information, the transceiver module to obtain the URSP policy information from a first policy control entity. Alternatively, optionally, the processing module is further configured to control, based on the URSP identification information, the transceiver module to obtain the URSP policy information from a network storage network element.

In a possible design, the processing module is further configured to: before controlling, based on the URSP identification information, the transceiver module to obtain the URSP policy information from the first policy control entity, control the transceiver module to obtain identification information of the first policy control entity from the session management network element. Alternatively, optionally, the processing module is further configured to: before controlling, based on the URSP identification information, the transceiver module to obtain the URSP policy information from the first policy control entity, control the transceiver module to obtain identification information of the first policy control entity from a binding support network element.

In a possible design, the processing module is further configured to: before controlling the control transceiver module to send the policy control response message to the session management network element, determine, based on the URSP policy information, to accept the policy control request message.

Further, the policy control request message may further carry session configuration information. Correspondingly, the processing module is further configured to determine that the session configuration information matches the URSP policy information.

Optionally, the communications apparatus in the tenth aspect may further include a memory. The storage module stores a program or instructions. When the processing module executes the program or the instructions, the communications apparatus in the tenth aspect performs a function of a second policy control entity in the communications method according to any possible implementation of the seventh aspect and the eighth aspect.

It should be noted that the communications apparatus in the tenth aspect may be a second policy control entity, or may be a chip or a chip system disposed in the second policy control entity. This is not limited in this application.

In addition, for technical effects of the communications apparatus in the tenth aspect, refer to technical effects of the communications method in the seventh aspect. Details are not described herein again.

According to an eleventh aspect, a communications apparatus is provided. The communications apparatus includes a processor. The processor is coupled to a memory, and the memory is configured to store a computer program. The processor is configured to execute the computer program stored in the memory, so that the communications apparatus performs a function of any device, network device, or entity in the terminal, the mobility management network element, the session management network element, the first policy control entity, and the second policy control entity in the communications method according to any possible implementation of the first aspect to the third aspect, or performs a function of any device, network device, or entity in the terminal, the mobility management network element, the session management network element, the first policy control entity, and the second policy control entity in the communications method according to any possible implementation of the seventh aspect and the eighth aspect.

In a possible design, the communications apparatus in the eleventh aspect may further include a transceiver. The transceiver may be a transceiver circuit or an input/output port. The transceiver may be used by the communications apparatus to communicate with another communications apparatus.

In this application, the communications apparatus in the eleventh aspect may be the first stage and/or the second node, or a chip or a chip system disposed inside the first node and/or the second node.

For technical effects of the communications apparatus in the eleventh aspect, refer to technical effects of the communications method in the first aspect or the seventh aspect. Details are not described herein again.

According to a twelfth aspect, a chip system is provided. The chip system includes a processor and an input/output port, the processor is configured to implement a processing function in the first aspect to the eleventh aspect, and the input/output port is configured to implement a transceiver function in the first aspect to the eleventh aspect.

In a possible design, the chip system further includes a memory. The memory is configured to store necessary program instructions and necessary data.

The chip system may include a chip, or may include a chip and another discrete component.

According to a thirteenth aspect, a computer-readable medium is provided. The computer-readable storage medium stores computer instructions. When the computer instructions run on a computer, the computer is enabled to perform the communications method according to any possible implementation of the first aspect to the fourth aspect, or the seventh aspect and the eighth aspect.

According to a fourteenth aspect, a computer program product is provided. The computer program product includes a computer program or instructions. When the computer program or instructions run on a computer, the computer is enabled to perform the communications method according to any possible implementation of the first aspect to the fourth aspect, or the seventh aspect and the eighth aspect.

### BRIEF DESCRIPTION OF DRAWINGS

FIG. 1 is a schematic architectural diagram 1 of a communications system according to an embodiment of this application;
FIG. 2 is a schematic architectural diagram 2 of a communications system according to an embodiment of this application;
FIG. 3 is a schematic architectural diagram of a 5G communications system in a non-roaming scenario according to an embodiment of this application;
FIG. 4 is a schematic architectural diagram of a 5G communications system in an HR scenario according to an embodiment of this application;
FIG. 5 is a schematic architectural diagram of a 5G communications system in an LBR scenario according to an embodiment of this application;
FIG. 6 is a schematic diagram 1 of a structure of a communications apparatus according to an embodiment of this application;
FIG. 7A and FIG. 7B are a schematic diagram 1 of a PDU session establishment/modification procedure according to an embodiment of this application;
FIG. 8 is a schematic diagram 2 of a PDU session establishment/modification procedure according to an embodiment of this application; and
FIG. 9 is a schematic diagram 2 of a structure of a communications apparatus according to an embodiment of this application.

### DESCRIPTION OF EMBODIMENTS

The following describes the technical solutions of this application with reference to the accompanying drawings.

The technical solutions in the embodiments of this application may be applied to various communications systems such as a long term evolution (long term evolution, LTE) system, an LTE frequency division duplex (frequency division duplex, FDD) system, and an LTE time division duplex (time division duplex, TDD) system, a worldwide interoperability for microwave access (worldwide interoperability for microwave access, WiMAX) communications system, a fifth generation (5th generation, 5G) mobile communications system, for example, an NR system, and a future communications system, for example, a 6G system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompany drawings. In addition, a combination of these solutions may be used.

In addition, in the embodiments of this application, the terms such as "example" and "for example" are used to represent giving an example, an illustration, or a description. Any embodiment or design scheme described as an "example" in this application should not be explained as being more preferred or having more advantages than another embodiment or design scheme. Exactly, "for example" is used to present a concept in a specific manner.

In the embodiments of this application, the terms "information (information)", "signal (signal)", "message (message)", "channel (channel)", and "signaling (signaling)" may sometimes be interchangeably used. It should be noted that, meanings expressed by the terms are consistent when differences between the terms are not emphasized. "Of (of)", "corresponding, relevant (corresponding, relevant)", and "corresponding (corresponding)" may be interchangeably used sometimes. It should be noted that, meanings expressed by the terms are consistent when differences between the terms are not emphasized.

In the embodiments of this application, a subscript such as in W1 may be mistakenly written in a non-subscript form such as W1 sometimes, and expressed meanings are consistent when differences are not emphasized.

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that: With evolution of the network architecture and emergence of new service scenarios, the technical solutions provided in the embodiments of this application are also applicable to similar technical problems.

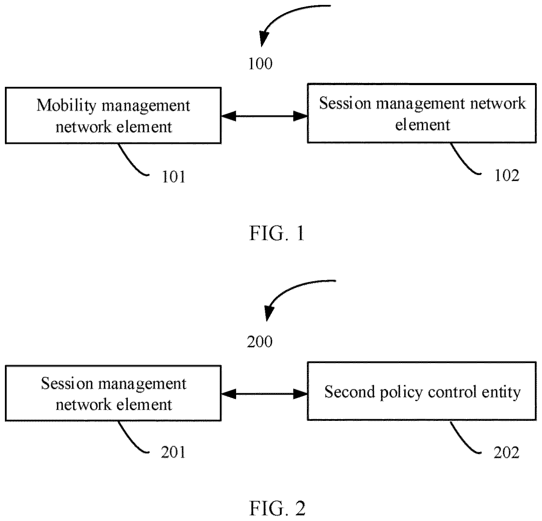

Some scenarios in the embodiments of this application are described by using a scenario in a communications system shown in FIG. 1 as an example. It should be noted that the solutions in the embodiments of this application may also be used in another mobile communications system, and a corresponding name may also be replaced with a name of a corresponding function in the another mobile communications system.

For ease of understanding the embodiments of this application, communications systems shown in FIG. 1 and FIG. 2 are first used as examples to describe in detail a communications system applicable to the embodiments of this application.

FIG. 1 is a schematic architectural diagram 1 of a communications system to which a communications method according to an embodiment of this application is applicable. As shown in FIG. 1, a communications system 100 includes a mobility management network element 101 and a session management network element 102. The mobility management network element 101 is configured to: receive a first session request message sent by a terminal, obtain URSP policy information based on URSP identification information carried in the first session request message, and send, to the session management network element 102, a second session request message that carries the URSP policy information. The session management network element 102 is configured to: receive the second session request message, and determine, based on the URSP policy information carried in the second session request message, whether to accept a PDU session request message initiated by the terminal. The URSP policy information is used to formulate a policy rule for the PDU session request initiated by the terminal.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier. Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

In a possible design, the session management network element is further configured to: before sending a policy control request message to a second policy control entity, determine, based on the URSP policy information, to accept the second session request message.

For example, the second session request message further carries session configuration information. Correspondingly, the session management network element is further configured to determine that the session configuration information matches the URSP policy information.

In a possible design, the session management network element is further configured to receive a policy control response message from the second policy control entity. The policy control response message carries the policy rule.

It should be noted that the communications system 100 shown in FIG. 1 may further include another network element, a network device, or a network entity, for example, a first policy control entity or the second policy control entity. This is not limited in this application.

In the communications system in FIG. 1, the mobility management network element can obtain the corresponding URSP policy information based on the URSP identification information carried in the first session request message from the terminal, and send, to the session management network element, the second session request message that carries the URSP policy information, so that the session management network element checks, based on the URSP policy information, a URSP rule carried in a session request message initiated by the terminal, to avoid a problem that in a scenario in which an SM-PCF network element and an AM-PCF network element are different PCF network elements, when the terminal initiates the session request message by selecting other route selection descriptor (RSD) information with better quality of service, instead of using route selection descriptor (RSD) information configured in a network, because the session management network element cannot perceive a URSP rule on which a PDU session establishment/modification request message initiated by the terminal is based, whether the PDU session establishment/modification request initiated by the terminal follows the URSP rule cannot be checked. Therefore, a capability of controlling admission of terminal behavior by a network side can be improved.

FIG. 2 is a schematic architectural diagram 2 of a communications system to which a communications method according to an embodiment of this application is applicable. As shown in FIG. 2, a communications system 200 includes a session management network element 201 and a second policy control entity 202. The session management network element 201 is configured to send, to the second policy control entity 202, a policy control request message that carries URSP identification information. The second policy control entity 202 is configured to: obtain URSP policy information based on the URSP identification information carried in the policy control request message, determine, based on the obtained URSP policy information, to accept the policy control request message initiated by the session management network element 201, and send, to the session management network element 201, a policy control response message that carries a policy rule formulated based on the URSP policy information.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

The second policy control entity is further configured to obtain the URSP policy information from a first policy control entity based on the URSP identification information.

The second policy control entity is further configured to obtain identification information of the first policy control entity from the session management network element before obtaining the URSP policy information from the first policy control entity based on the URSP identification information.

In a possible design, the second policy control entity is further configured to: before sending the policy control response message to the session management network element, determine, based on the URSP policy information, to accept the policy control request message.

Further, the policy control request message may further carry session configuration information. Correspondingly, the second policy control entity is further configured to determine that the session configuration information matches the URSP policy information.

It should be noted that the communications system shown in FIG. 2 may further include another network element, a network device, or a network entity, for example, a mobility management network element or the first policy control entity. This is not limited in this application.

In the communications system in FIG. 2, the second policy control entity obtains the corresponding URSP policy information based on the URSP identification information carried in the policy control request message from the session management network element, and check, based on the URSP policy information, a URSP rule used for a session request message initiated by the terminal, to avoid a problem that in a scenario in which an SM-PCF network element and an AM-PCF network element are different PCF network elements, when the terminal initiates the session request message by selecting other route selection descriptor (RSD) information with better quality of service, instead of using route selection descriptor (RSD) information configured in a network, because a policy control entity or the session management network element cannot perceive a URSP rule on which a PDU session establishment/modification request message initiated by the terminal is based, whether the PDU session establishment/modification request initiated by the terminal follows the URSP rule cannot be checked. Therefore, a capability of controlling admission of terminal behavior by a network side can be improved.

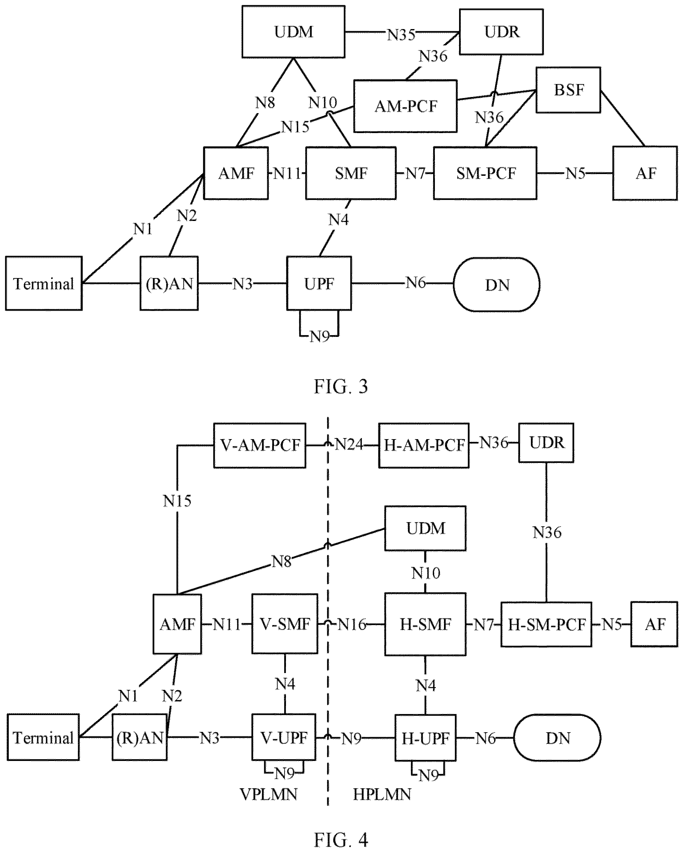

FIG. 3 is a schematic architectural diagram of a 5G communications system in a non-roaming scenario according to an embodiment of this application. As shown in FIG. 3, the 5G communications system usually includes the following network elements, a device, and a network, which are listed below one by one for description.

An AF network element is an application function (application function) network element. The AF network element is mainly configured to transfer a requirement of an application side for a network side, for example, a quality of service (quality of service, QoS) requirement and a service transmission delay requirement. The AF network element may be an application service deployed by an operator, for example, a voice call service provided by an Internet protocol multimedia subsystem (internet protocol multimedia subsystem, IMS), or may be a service provided by a third-party functional entity, for example, an online video playing service provided by a video website and an online game service provided by a game website.

A UDM network element is a unified data management (unified data management) network element. The UDM network element is mainly responsible for functions such as managing subscription data and user access authorization.

A UDR network element is a unified data repository (unified data repository) network element. The UDR network element is responsible for a function of accessing data of types such as subscription data, policy data, and application data.

A PCF network element is a policy control function network element. The PCF network element is mainly responsible for policy control functions such as session-level or service flow-level charging, a session-level or service flow-level QoS bandwidth guarantee, mobility management, and terminal policy decision-making. In this architecture, PCF network elements separately connected to an AMF network element and an SMF network element are respectively a PCF (PCF for access and mobility control, AM-PCF) network element used for mobility management and a PCF (PCF for session management, SM-PCF) network element used for session management. It should be noted that, in an actually deployed 5G communications system, the AM-PCF network element and the SM-PCF network element may be different PCF entities.

An SMF network element is a session management function network element. The SMF network element mainly performs functions such as session management, execution of a control policy delivered by a PCF network element, selection of a UPF network element, and allocation of an Internet protocol (internet protocol, IP) address of a terminal.

An AMF network element is an access and mobility management function network element. The AMF network element mainly performs functions such as mobility management, and access authentication/authorization. In addition, the AMF network element is further responsible for transmitting a user policy between a terminal and a PCF network element.

A UPF network element is a user plane function (user plane function) network element. As an interface between a (wireless) access network element accessed by a terminal and a data network (data network, DN), the UPF network element implements functions such as user plane data forwarding, session/flow-level charging statistics, and bandwidth limitation.

A (R)AN network element is a (radio) access network (radio access network) network element, and may correspond to different access networks in 5G, for example, a plurality of access manners such as wired access and wireless base station access.

A BSF represents a binding supporting function (binding supporting function) network element. When receiving a policy association establishment request sent by an SMF network element, a PCF network element stores information such as a terminal identifier, an IP address of a terminal, the network element identifier of the PCF network element, S-NSSAI, and a DNN in the BSF network element. When an AF network element needs to query a PCF network element corresponding to a session, the AF network element may query information about the corresponding PCF network element from the BSF network element based on information such as the IP address of a terminal and the terminal identifier.

Functions of interfaces between network elements, devices, and networks are described as follows:
N7 represents an interface between a PCF network element and an SMF network element, and is configured to deliver a PDU session granularity control policy and a service data flow granularity control policy.
N15 represents an interface between a PCF network element and an AMF network element, and is configured to deliver a terminal policy, an access control-related policy, or the like.
N5 represents an interface between an AF and a PCF, and is configured to deliver an application/service request and report a network event.
N4 represents an interface between an SMF and a UPF, and is configured to transmit information between a control plane and a user plane, including delivery of forwarding rules, QoS control rules, traffic statistics rules, and the like from the control plane to the user plane, and reporting of user-plane information.
N11 represents an interface between an SMF network element and an AMF network element, and is configured to: transfer PDU session tunnel information between a (R)AN network element and a UPF network element, transfer a control message to be sent to a terminal, transfer radio resource control information to be sent to the (R)AN network element, or the like.
N2 represents an interface between an AMF network element and a (R)AN network element, and is configured to transfer radio bearer control information from a core network side to the (R)AN network element, or the like.
N1 represents an interface between an AMF network element and a terminal, is unrelated to access, and is configured to transfer a QoS control rule, or the like to a terminal.
N8 represents an interface between an AMF network element and a UDM network element, and is used by the AMF network element to obtain access and mobility management-related subscription data and authentication data from the UDM network element, and used by the AMF network element to register current mobility management-related information of a terminal with the UDM network element.
N10 represents an interface between an SMF network element and a UDM network element, and is used by the SMF network element to obtain session management-related subscription data from the UDM network element, and used by the SMF network element to register current session-related information of a terminal with the UDM network element.
N35 represents an interface between a UDM network element and a UDR network element, and is used by the UDM network element to obtain subscriber subscription data information from the UDR network element.
N36 represents an interface between a PCF network element and a UDR network element, and is used by the PCF network element to obtain policy-related subscription data and application data-related information from the UDR network element.

In addition, there may also be an interface between a BSF network element and a PCF network element, and an interface between a BSF network element and an AF network element, but no specification is made in an existing protocol.

Referring to FIG. 3, when a terminal accesses a network, the terminal needs to complete a user registration procedure before enjoying a network service. For example, a general user registration procedure may be briefly described as follows: A terminal sends a registration request to an AMF network element by using a (R)AN network element, the AMF network element obtains subscription data from a specific UDM network element based on a user identifier, and the UDM network element may obtain actual subscription data from a UDR network element after receiving the request. In addition, the AMF network element may further initiate a user policy control creation request (UEPolicyControl_Create) and an access management policy control creation request (AMPolicyControl_Create) to a PCF network element, to separately obtain a UE policy and an access control policy. In this process, the PCF network element returns the access control policy to the AMF network element, and provides a terminal policy to the terminal by using the AMF network element.

Usually, the terminal policy may include the following two policies: an access network discovery and selection policy (access network discovery and selection policy, ANDSP) and a URSP policy. The ANDSP policy may be provided by an H-PCF network element and/or a V-PCF network element, and is mainly used to indicate that the terminal selects an access network type, for example, information such as an access network defined in a 3rd generation partnership project (3rd generation partnership project, 3GPP), or an access network defined in a non-3rd generation partnership project (non-3GPP). However, regardless of whether a scenario is a roaming scenario, the URSP policy can be provided by only the H-PCF network element. The URSP policy is mainly used by the terminal to determine how to select a route selection policy for a to-be-transmitted service data flow, for example, whether it is supported to offload the service data flow to a non-3GPP access network, or used by the terminal to select information such as a specific DNN, S-NSSAI, or an SSC mode to transmit the service data flow.

Referring to FIG. 3, the terminal may request to establish or modify a PDU session between the terminal and a data network, to implement a session service with PDU connectivity. The terminal allocates a PDU session identifier (PDU Session ID) to each PDU session, to distinguish the PDU session from another PDU session of the terminal.

For example, a general PDU session establishment procedure may be briefly described as follows: A terminal sends a session establishment request to an AMF network element by using a (R)AN network element accessed by the terminal. The AMF network element selects an SMF network element for a session, to provide a service for the session, stores a correspondence between the SMF network element and the PDU session, and then sends the session establishment request to the SMF network element. The SMF network element selects a corresponding UPF network element for the terminal, establishes a user plane transmission path, and allocates an IP address to the UPF network element. In this process, the SMF network element further initiates a policy control association establishment request to a PCF network element, to establish a policy control association between the SMF network element and the PCF network element. In a policy control association establishment process, the SMF network element stores a correspondence between the policy control association and the PDU session. In addition, an AF network element may further establish an AF session with the PCF network element, and the PCF network element performs a binding operation on the AF session and a policy control session.

It should be noted that the mobility management network element shown in FIG. 1 may be the AMF network element shown in FIG. 3, the session management network elements shown in FIG. 1 and FIG. 2 may be the SMF network element shown in FIG. 3, and the second policy control entity shown in FIG. 2 may be the SM-PCF network element shown in FIG. 3.

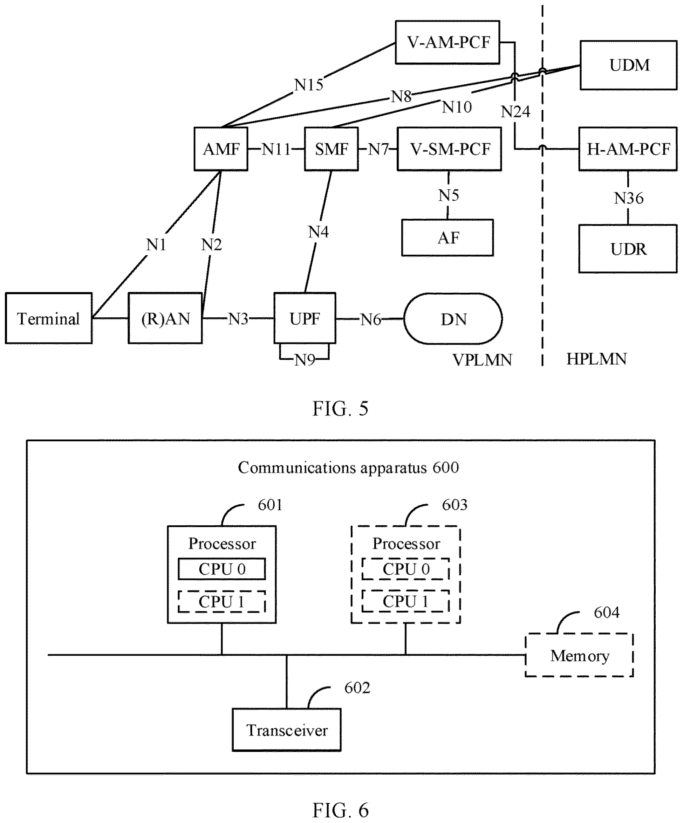

In addition, the communications system shown in FIG. 1 or FIG. 2 may be applied to the 5G communications system shown in FIG. 3. In the roaming scenario, the operator may use a 5G communications system in a home-routed (home-routed roaming, HR) scenario shown in FIG. 4, and/or a 5G communications system in a local breakout (local breakout roaming, LBR) scenario shown in FIG. 5. Descriptions are separately provided below.

For example, as shown in FIG. 4, the 5G communications system includes a DN, a home public land mobile network (home public land mobile network, HPLMN), and a visited public land mobile network (visited public land mobile network, VPLMN). The VPLMN includes a terminal, a (R)AN, a visited UPF (visited UPF, V-UPF) network element, an AMF network element, a visited SMF (visited SMF, V-SMF) network element, and a visited AM-PCF (visited AM-PCF, V-AM-PCF) network element. The HPLMN includes a home UPF (home UPF, H-UPF) network element, a home SMF (home SMF, H-SMF) network element, a home SM-PCF (home SM-PCF, H-SM-PCF) network element, an AF network element, a UDM network element, and a home AM-PCF (home AM-PCF, H-AM-PCF) network element.

N9 is used for communication between a V-UPF network element and an H-UPF network element, to establish a data transmission channel between the terminal located in the VPLMN and a DN located on a home location.

N16 is used for communication between a V-SMF network element and an H-SMF network element.

N24 is used for communication between a V-AM-PCF network element and an H-AM-PCF network element.

For another interface, refer to related descriptions of the 5G communications system in the non-roaming scenario shown in FIG. 3. Details are not described herein again.

As shown in FIG. 4, in the HR roaming scenario, the AMF network element is located in the VPLMN, and a session management function is performed by the H-SMF that supports interaction between the UDM network element and the H-SM-PCF network element. In addition, the H-AM-PCF network element connected to the V-AM-PCF network element and the H-SM-PCF network element connected to the H-SMF network element respectively correspond to the AM-PCF network element and the SM-PCF network element in this embodiment of this application, and may be different PCF entities in an actually deployed communications system. In this embodiment of this application, a URSP policy on which a PDU session request initiated by the terminal is based may be provided by the H-SM-PCF network element.

For example, as shown in FIG. 5, the 5G communications system includes a DN, an HPLMN, and a VPLMN. The VPLMN includes: a terminal, a (R)AN, a UPF network element, an AMF network element, an SMF network element, a V-SM-PCF network element, an AF network element, and a V-AM-PCF network element. The HPLMN includes an H-AM-PCF network element and a UDM network element.

As shown in FIG. 5, in the LBO roaming scenario, both the AMF network element and the SMF network element are located in the VPLMN. In this case, a session management function is performed by a visited SMF network element. In addition, the V-AM-PCF network element connected to the AMF network element and the V-SM-PCF network element connected to the SMF network element respectively correspond to the AM-PCF network element and the SM-PCF network element in this embodiment of this application, and may be different PCF entities in an actually deployed 5G communications system. In this embodiment of this application, a URSP rule on which a PDU session request initiated by the terminal is based is still provided by the H-AM-PCF network element.

Referring to FIG. 4 or FIG. 5, in a current standard, when the terminal initiates a PDU session establishment/modification request, because the AM-PCF network element and the SM-PCF network element may be different PCF network elements, and the SMF network element cannot determine, based on only PDU configuration information carried in a PDU session establishment/modification request message, for example, a DNN and S-NSSAI, whether a URSP rule on which a session association performed for the terminal is based is correct, when receiving the PDU session establishment/modification request, the SMF network element cannot check PDU session configuration information carried in a PDU session request message initiated by the terminal.

For example, a URSP rule received by the terminal indicates that an application (application, APP) 1 needs to use DNN 1 + S-NSSAI 1 as a PDU session parameter. However, to obtain better quality of service, the terminal does not use the PDU session establishment/modification request message actually initiated by the terminal to carry the S-NSSAI 1, but selects S-NSSAI 2 with a guarantee of higher quality of service. In other words, the PDU session establishment/modification request message provides only DNN 1 + S-NSSAI 2 to identify a to-be-requested resource. In addition, because the PDU session establishment/modification request message also does not carry description information of the APP 1, the SMF network element cannot determine an application/a service actually corresponding to the PDU session establishment/modification request message, or whether the PDU session establishment/modification request message is based on the URSP rule received by the terminal. Therefore, session admission control cannot be accurately performed.

Optionally, the terminal (terminal) in the embodiments of this application may be a device configured to implement a wireless communication function, for example, a terminal device or a chip that may be used in the terminal device. The terminal may be user equipment (user equipment, UE), an access terminal, a terminal unit, a terminal station, a mobile station, a mobile station, a remote station, a remote terminal, a mobile device, a wireless communication device, a terminal agent, a terminal apparatus, or the like in a 5G network or a future evolved PLMN. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. The terminal may be movable or fixed.

Optionally, the access network in this embodiment of this application usually includes a device that is located on a network side of the communications system and that is used to access a core network, or a chip or a chip system that may be disposed on the device, for example, a base station, a broadband network gateway (broadband network gateway, BNG), an aggregation switch, or a non-3rd generation partnership project (3rd generation partnership project, 3GPP) access device. The network device includes but is not limited to: an access point (access point, AP) in a wireless fidelity (wireless fidelity, Wi-Fi) system, such as a home gateway, a router, a server, a switch, and a bridge, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission and reception point, TRP; or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in a 5G system. The network device may alternatively be a network node, such as a baseband unit (BBU), a distributed unit (distributed unit, DU), or a road side unit (road side unit, RSU) having a base station function, that constitutes a gNB or a transmission point.

It should be noted that, the mobility management network element, the session management network element, and the second policy control entity provided in the embodiments of this application may be a device having a single network function, or a chip or a chip system disposed in the device, or may be a device having a plurality of network functions or a chip or a chip system disposed in the device. Physical forms of the foregoing network elements and/or entities and supported network functions are not limited in the embodiments of this application.

For example, the mobility management network element in the embodiments of this application may be a device that supports only an access and mobility management function, or may be a device that supports both the access and mobility management function and another network function. For example, the session management network element in the embodiments of this application may be a device that supports only the session management function, or may be a device that supports both the session management function and another network function. For example, the second policy control entity in the embodiments of this application may be a device that supports only a policy rule making function, or may be a device that supports both the policy rule making function and another network function.

Referring to FIG. 4 or FIG. 5, a person skilled in the art should understand that a same communications system may include a plurality of PCF network elements, and a plurality of policy rules such as a URSP rule, a PCC rule, and a PDU session rule are usually used in a PDU session establishment/modification procedure initiated by the terminal. Therefore, a plurality of policy rules used in a same PDU session may be formulated by different PCF network elements. For example, in the embodiments of this application, the first policy control entity may be a PCF network element configured to formulate a URSP rule, and the second control policy entity may be a PCF network element configured to formulate a PCC rule and a PDU session rule.

It should be noted that the foregoing network elements and/or entities may be different communication devices, or may be different communications apparatuses, modules, or subsystems in a same communication device. This is not limited in the embodiments of this application.

It should be understood that FIG. 1 is merely a simplified schematic diagram of an example for ease of understanding. The communications system may further include another network device not drawn in FIG. 1.

FIG. 6 is a schematic diagram of a structure of a communications apparatus 600 to which a communications method according to an embodiment of this application is applicable. Referring to FIG. 1 to FIG. 5, the communications apparatus 600 may be any one of a terminal, a mobility management network element, a session management network element, and a second policy control entity, or may be a chip system applied to the terminal, the mobility management network element, the session management network element, or the second policy control entity, or another component, an apparatus, or a subsystem having a corresponding function.

As shown in FIG. 6, the communications apparatus 600 may include a processor 601 and a transceiver 602. There is a signal connection between the processor 601 and the transceiver 602. For example, the processor 601 and the transceiver 602 may be connected through a bus.

The following describes each component of the communications apparatus 600 in detail with reference to FIG. 6.

The processor 601 is a control center of the communications apparatus 600, and may be one processor or may be a collective term of a plurality of processing elements. For example, the processor 601 is one or more central processing units (central processing unit, CPU), or may be an application-specific integrated circuit (application-specific integrated circuit, ASIC), or may be configured as one or more integrated circuits for implementing the embodiments of this application, for example, one or more digital signal processors (digital signal processor, DSP), one or more baseband processors (baseband processor, BBP), or one or more field programmable gate arrays (field programmable gate array, FPGA).

During specific implementation, in an embodiment, the processor 601 may include one or more CPUs, for example, a CPU 0 and a CPU 1 shown in FIG. 6.

During specific implementation, in an embodiment, the communications apparatus 600 may alternatively include a plurality of processors, for example, the processor 601 and a processor 603 shown in FIG. 6. Each of the processors may be a single-core (single-CPU) processor or may be a multi-core (multi-CPU) processor. The processor herein may be one or more communication devices, circuits, and/or processing cores configured to process data (for example, computer program instructions).

The transceiver 602 is used by the communications apparatus 600 to communicate with another communications apparatus. Certainly, the transceiver 602 may be further configured to communicate with a communication network. The transceiver 602 may include a receiving unit for implementing a receiving function and a sending unit for implementing a sending function.

Optionally, there may be a signal connection between the processor 601 and a memory 604. For example, the processor 601 and the memory 604 may be connected through a bus. Correspondingly, the processor 601 may execute various functions of the communications apparatus 600 by running or executing software program stored in the memory 604 and invoking data stored in the memory 604. For a specific implementation, refer to the following method embodiments. Details are not described herein again.

It should be understood that the memory 604 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage communication device, or any other medium that can be used to carry or store expected program code in a form of an instruction or a data structure and that can be accessed by a computer, but is not limited thereto. The memory 604 may exist independently, or may be integrated with the processor 601.

It should be noted that the structure of the communications apparatus 600 shown in FIG. 6 does not constitute a limitation on the communications apparatus. An actual communications apparatus may include more or fewer components than those shown in the figure, or combine some components, or have different component arrangement.

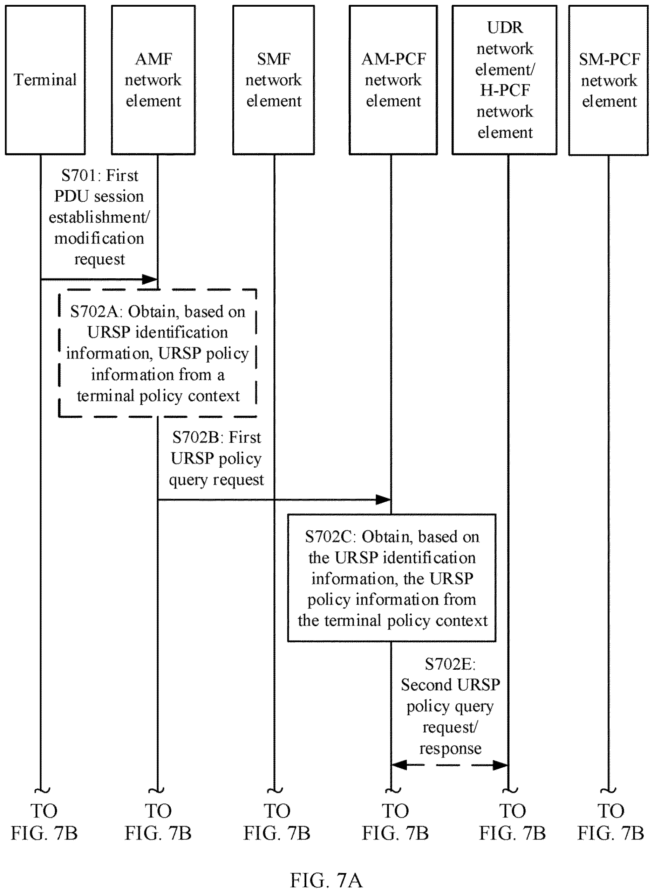

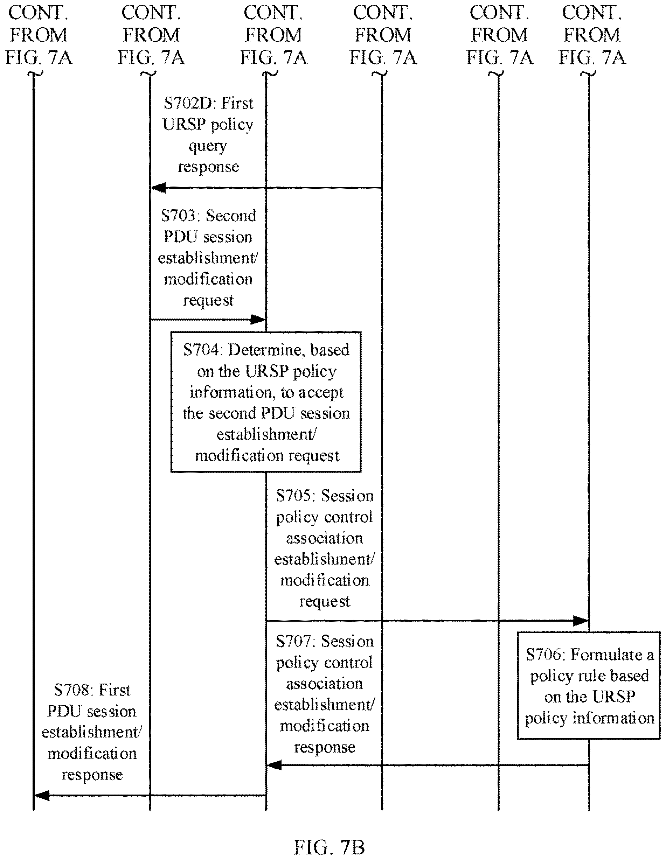

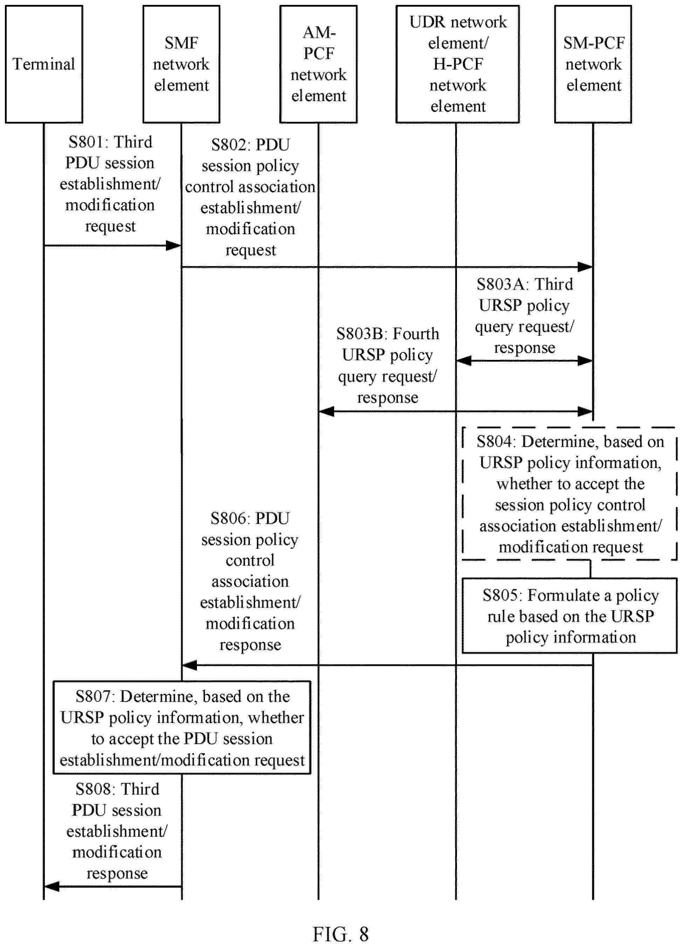

The following specifically describes the communications method in the embodiments of this application with reference to two PDU session establishment/modification procedures shown in FIG. 7A, FIG. 7B, and FIG. 8.

FIG. 7A and FIG. 7B are a schematic diagram 1 of a PDU session establishment/modification procedure according to an embodiment of this application. The PDU session establishment/modification procedure may be used to implement the communications method provided in the embodiments of this application, to complete communication between the mobility management network element 101 and the session management network element 102 in the communications system 100 shown in FIG. 1.

With reference to FIG. 3 to FIG. 5, the mobility management network element 101 and the session management network element 102 may be respectively the AMF network element and the SMF network element in the non-roaming scenario shown in FIG. 3, the AMF network element and the H-SMF network element in the HR roaming scenario shown in FIG. 4, or the AMF network element and the SMF network element in the LBO roaming scenario shown in FIG. 5.

In addition, the communications system 100 shown in FIG. 1 further relates to a first policy control entity and a second policy control entity. With reference to FIG. 3 to FIG. 5, the first policy control entity and the second policy control entity may be respectively the AM-PCF network element and the SM-PCF network element in the non-roaming scenario shown in FIG. 3, the H-AM-PCF network element and the H-SM-PCF network element in the HR roaming scenario shown in FIG. 4, or the V-AM-PCF network element and the V-SM-PCF network element in the LBO roaming scenario shown in FIG. 5.

In descriptions of steps of the PDU session establishment/modification procedure shown in FIG. 7A and FIG. 7B, the SMF network element shown in FIG. 3, the H-SMF network element shown in FIG. 4, and the SMF network element shown in FIG. 5 are collectively referred to as an SMF network element. The AM-PCF network element shown in FIG. 3, the H-AM-PCF network element shown in FIG. 4, and the V-AM-PCF network element shown in FIG. 5 are collectively referred to as an AM-PCF network element. The SM-PCF network element shown in FIG. 3, the H-SM-PCF network element shown in FIG. 4, and the V-SM-PCF network element shown in FIG. 5 are collectively referred to as an SM-PCF network element. The AMF network element, the SMF network element, the AM-PCF network element, and the SM-PCF network element are used as an example below to describe in detail the PDU session establishment/modification procedure shown in FIG. 7A and FIG. 7B.

As shown in FIG. 7A and FIG. 7B, the PDU session establishment/modification procedure includes the following steps:
S701: The terminal sends a first PDU session establishment/modification request message to the AMF network element.

The first PDU session establishment/modification request message carries URSP identification information and PDU session configuration information.

For example, when determining that a specific service/application needs to be initiated, the terminal performs a matching operation on a received URSP rule based on description information of the service/application, for example, an APP ID. If matching succeeds, the terminal initiates the PDU session establishment/modification request message to the AMF network element based on route selection descriptor (RSD) information in a successfully matched URSP rule.

The PDU session configuration information may usually include the following content configured by an operator based on the URSP rule: a data network name (data network name, DNN), single network slice selection assistance information (single network slice selection assistance information, S-NSSAI), and/or an N1 session management container (N1 session management container, N1 SM) message. The N1 SM message usually includes a session and service continuity (session and service continuity, SSC) mode (SSC mode), a session type (PDU session type), and an access type (access type). For example, the PDU session configuration information may include only the DNN and the S-NSSAI. For another example, the PDU session configuration information may include some or all content of the DNN, the S-NSSAI, and the N1 SM message, for example, one or more of the SSC mode, the session type, and the access type.

For example, URSP rule information including the PDU session configuration may be configured by a policy control network element responsible for access and mobility management in an HPLMN. Specifically, in the non-roaming scenario shown in FIG. 3, the PDU session configuration information is configured by the AM-PCF network element. In the HR roaming scenario shown in FIG. 4 and the LBO roaming scenario shown in FIG. 5, the PDU session configuration information is configured by the H-AM-PCF network element. A specific configuration process may be understood as follows: When the terminal registers with a 5G network or is handed over from another network (for example, a 4G network and a non-3GPP network) to the 5G network, the H-AM-PCF may deliver an updated URSP rule to the terminal based on URSP policy information provided by a user and locally cached by the H-AM-PCF, and/or subscribed URSP policy information that is of the terminal and that is stored in a UDR network element. For example, as shown in FIG. 3, the AM-PCF network element may deliver the updated URSP rule to the terminal through the AMF network element. For another example, as shown in FIG. 4 or FIG. 5, the H-AM-PCF network element may deliver the updated URSP rule to the terminal through the V-AM-PCF network element and the AMF network element.

Table 1 shows an example of the URSP rule provided in this embodiment of this application. As shown in Table 1, the URSP rule may include a URSP rule identifier (URSP rule identifier), URSP rule precedence (URSP rule precedence), traffic descriptor information (traffic descriptor), and an RSD list. The URSP rule identifier corresponds to a URSP rule identified by the URSP rule identifier, and is used to distinguish between different URSP rules. The URSP rule precedence is used to determine an application order of the URSP rule. For example, the URSP rule is selected in descending order of priorities. The traffic descriptor information may include one or more pieces of application descriptor information (application descriptor), a DNN on which a matching operation is performed with a DNN provided by an application, and the like. It should be understood that the traffic descriptor information may further include other content. For details, refer to an existing protocol. Details are not described herein again. The RSD list may include one or more RSDs. For content of each RSD, refer to Table 2.

**Table 1**

| Information Name | Description | Type | Revisable or not | Applicable To |
|---|---|---|---|---|
| URSP rule identifier | To distinguish between different URSP rules | Optional | Revisable | Terminal context |
| URSP rule precedence | To determine URSP rule precedence | Mandatory | Revisable | Terminal context |
| Traffic descriptor | To define a composition of a URSP rule | Mandatory | | |
| Application descriptor | Including an operating system identifier and one or more operating system application identifiers | Optional | Revisable | Terminal context |
| DNN | DNN used to match DNN information provided by an application | Optional | Revisable | Terminal context |
| RSD list | For content of each RSD, refer to Table 2 | Mandatory | | |

Table 2 shows an RSD example provided in this embodiment of this application. As shown in Table 2, the RSD may include a precedence (route selection descriptor precedence) of the RSD and content (route selection components) of the RSD. The content of the RSD may include one or more of the following: SSC mode selection (SSC mode selection), network slice selection (network slice selection), DNN (DNN selection), PDU session type selection (PDU session type selection), and an optimal access type (optimal access type), and is used to match each item of content in the foregoing PDU configuration information. The precedence of the RSD is used to determine a matching order of the content of the RSD. For example, matching is performed with the PDU configuration information in descending order of priorities. When an RSD with high precedence is successfully found through matching, an RSD with low precedence is no longer searched for through matching. It should be understood that the content of the RSD may further include other information. For details, refer to an existing protocol. Details are not described herein again.

It should be noted that both the DNN in Table 1 and the DNN selection in Table 2 are optional. In this embodiment of this application, only the DNN or the DNN selection needs to be provided.

**Table 2**

| Information Name | Description | Type | Revisable or not | Applicable To |
|---|---|---|---|---|
| RSD precedence | To determine precedence of an RSD | Mandatory | Revisable | Terminal context |
| RSD content | To define content of an RSD | Mandatory | | |
| SSC mode selection | Single value of an SSC mode | Optional | Revisable | Terminal context |
| Network slice selection | One or more pieces of candidate S-NSSAI | Optional | Revisable | Terminal context |
| DNN selection | One or more candidate DNNs | Optional | Revisable | Terminal context |
| PDU session type selection | Single value of a PDU session type | Optional | Revisable | Terminal context |
| Optimal access type | When the terminal requests to establish a PDU session matching an application, an access type of a high priority is indicated, and a value may be one of the following: 3GPP, non-3GPP, and a multi-access mode. | Optional | Revisable | Terminal context |

The following describes in detail content of the URSP identification information with reference to Table 1 and Table 2. For example, the URSP identification information may be any one of the following:
In a possible design method, the URSP identification information may be traffic descriptor information (briefly referred to as URSP identification information 1 below), for example, the traffic descriptor information in Table 1. The traffic descriptor information is used to identify an application/a service requested by the PDU session establishment/modification request message initiated by the terminal.

Alternatively, optionally, the URSP identification information may be a URSP rule identifier (briefly referred to as URSP identification information 2 below), for example, the URSP rule identifier in Table 1. In other words, the URSP rule received by the terminal before initiating the PDU session establishment/modification request further needs to include the URSP rule identifier.

Alternatively, optionally, the URSP identification information may include some or all content of PDU configuration information configured in a network. To be specific, the URSP identification information may include one or more of the following: a data network name (DNN), single network slice selection assistance information (S-NSSAI), a session and service continuity (SSC) mode, a session type, and an access type (briefly referred to as URSP identification information 3 below), for example, some or all content in Table 2.

It should be noted that, in a PDU session establishment scenario, DNN+S-NSSAI in the URSP identification information is included in a PDU session establishment request message sent by the terminal, and other information, for example, some or all content of the N1 SM message further needs to be sent to the AMF network element. However, in a PDU session modification request scenario, because the AMF network element receives only a PDU session identifier, to trigger the AMF network element to perform an operation of obtaining the URSP policy information, some or all information in the N1 SM message further needs to be sent to the AMF network element.

S702: The AMF network element obtains the URSP policy information based on the URSP identification information.

For example, referring to Table 1 and Table 2, corresponding to the URSP identification information in S701, the URSP policy information may be as follows:
In a possible design method, when the URSP identification information is traffic descriptor information, the URSP policy information may include one or more pieces of route selection descriptor (RSD) information (briefly referred to as URSP policy information 1 below) corresponding to the traffic descriptor information, for example, the one or more RSD examples shown in Table 2.

For example, the URSP identification information includes traffic descriptor information 1 and traffic descriptor information 2. The traffic descriptor information 1 corresponds to an RSD 1 and an RSD 2, and the traffic descriptor information 2 corresponds to an RSD 3 and an RSD 4. The URSP policy information may include the RSD 1 to the RSD 4. It should be noted that different traffic descriptor information may alternatively correspond to a same RSD example. For example, both the traffic descriptor information 1 and the traffic descriptor information 2 may correspond to an RSD 5. Therefore, the URSP policy information may include the RSD 1 to the RSD 5.

Alternatively, optionally, when the URSP identification information is a URSP rule identifier, the URSP policy information may include traffic descriptor information (briefly referred to as URSP policy information 2 below) corresponding to a URSP rule identified by the URSP rule identifier, for example, the traffic descriptor information as shown in Table 1, and one or more pieces of route selection descriptor (RSD) information, for example, the one or more RSD examples shown in Table 2.

For example, the URSP identification information includes a URSP rule identifier 1 and a URSP rule identifier 2, traffic descriptor information corresponding to a URSP rule 1 identified by the URSP rule identifier 1 is the traffic descriptor information 1 and the traffic descriptor information 2, the traffic descriptor information 1 corresponds to an RSD 1, an RSD 2, and an RSD 5, the traffic descriptor information 2 corresponds to an RSD 3 to the RSD 5, traffic descriptor information corresponding to a URSP rule 2 identified by the URSP rule identifier 2 is traffic descriptor information 3, an RSD example corresponding to the traffic descriptor information 3 includes an RSD 6. Therefore, the URSP policy information may include the RSD 1 to the RSD 6.

Alternatively, optionally, when the URSP identification information includes some or all content of the PDU session configuration information, the URSP policy information may include one or more pieces of traffic descriptor information (briefly referred to as URSP policy information 3 below) matching the URSP identification information.

For example, the URSP identification information is a DNN 1 and S-NSSAI 1 in PDU session configuration information. Therefore, the URSP policy information may include an example of one or more pieces of traffic descriptor information RSD corresponding to all URSPs whose values of DNN selection and network slice selection in the RSD list are respectively the DNN 1 and the S-NSSAI 1. For example, the URSP identification information is the DNN 1, the S-NSSAI 1, and an SSC mode 1 in PDU session configuration information. Therefore, the URSP policy information may include an example of one or more pieces of traffic descriptor information RSD corresponding to all URSP rules whose values of DNN selection, network slice selection, and SSC mode selection in the RSD list are respectively the DNN 1, the S-NSSAI 1, and the SSC mode 1.

Specifically, in a possible design method, S702 in which the AMF network element obtains the URSP policy information based on the URSP identification information may include the following step:
S702A: The AMF network element obtains, based on the URSP identification information, the URSP policy information from a terminal policy context locally cached by the AMF network element.

Optionally, the AMF network element may separately query, by using the URSP identification information 1 to the URSP identification information 3 as a query condition, the URSP policy information 1 to the URSP policy information 3 in a UE policy context (UE policy context) locally cached by the AMF network element.

Alternatively, in another possible design method, S702 in which the AMF network element obtains the URSP policy information based on the URSP identification information may include:
The AMF network element obtains the URSP policy information from the AM-PCF network element based on the URSP identification information, which may specifically include the following steps.

S702B: The AMF network element sends a first URSP policy query request message to the AM-PCF network element.

The first URSP policy query request message carries URSP identification information that is used as a query condition of the URSP policy information.

S702C: The AM-PCF network element obtains, based on the URSP identification information, the URSP policy information from a terminal policy context locally cached by the AM-PCF network element.

For example, the AM-PCF network element may separately query, by using the URSP identification information 1 to the URSP identification information 3 as a query condition, the URSP policy information 1 to the URSP policy information 3 from a UE policy context locally cached by the AM-PCF network element.

It should be noted that the solution described in S702C may be applied to the scenarios shown in FIG. 3 and FIG. 4. For example, in the non-roaming scenario shown in FIG. 3, an H-PCF network element and the AM-PCF network element shown in FIG. 7A are a same PCF network element, namely, the AM-PCF network element shown in FIG. 3. For example, in the HR roaming scenario shown in FIG. 4, an H-PCF network element and the AM-PCF network element shown in FIG. 7A are a same PCF network element, namely, the H-AM-PCF network element shown in FIG. 4.

S702D: The AM-PCF network element sends a first URSP policy query response message to the AMF network element.

The first URSP policy query response message carries the URSP policy information.

It is easily understood that referring to FIG. 3 to FIG. 5, the AM-PCF network element may alternatively obtain the URSP policy information from another network element based on the URSP identification information. Therefore, optionally, S702C may also be replaced with the following step:
S702E: The AM-PCF network element obtains the URSP policy information from the UDR network element or the H-PCF network element based on the URSP identification information, which may specifically include the following steps:
The AM-PCF network element sends a second URSP policy query request message to the UDR network element or the H-PCF network element, and receives a second URSP policy query response message from the UDR network element or the H-PCF network element.

The second URSP policy query request message carries the URSP identification information, the URSP identification information is used by the UDR network element or the H-PCF network element to query the URSP policy information, and the second URSP policy query response message carries the URSP policy information.

It should be noted that the solution of obtaining the URSP policy information from the UDR network element in S702E may be applied to a scenario in which the AM-PCF network element shown in FIG. 7A is located in an HPLMN, namely, applicable to the scenarios shown in FIG. 3 and FIG. 4. For example, in the non-roaming scenario shown in FIG. 3, the H-PCF network element and the AM-PCF network element shown in FIG. 7A are a same PCF network element, namely, the AM-PCF network element shown in FIG. 3. Correspondingly, that the AM-PCF network element sends the second URSP policy query request message to the UDR network element, and receives the second URSP policy query response message from the UDR network element may be specifically implemented as follows: The AM-PCF network element sends the second URSP policy query request message to the UDR network element through an N36 interface, and receives the second URSP policy query response message from the UDR network element through the N36 interface.

For example, in the HR roaming scenario shown in FIG. 4, an H-PCF network element and the AM-PCF network element shown in FIG. 7A are a same PCF network element, namely, the H-AM-PCF network element shown in FIG. 4. Correspondingly, that the AM-PCF network element sends the second URSP policy query request message to the UDR network element, and receives the second URSP policy query response message from the UDR network element may be specifically implemented as follows: The H-AM-PCF network element sends the second URSP policy query request message to the UDR network element through an N36 interface, and receives the second URSP policy query response message from the UDR network element through the N36 interface.

In addition, the solution of obtaining the URSP policy information from the H-PCF network element in S702E may be applied to a scenario in which the AM-PCF network element shown in FIG. 7A is located in a VPLMN, and a scenario in which the H-PCF network element shown in FIG. 7A is located in the HPLMN, namely, applicable to the LBO roaming scenario shown in FIG. 5. For example, in the LBO roaming scenario shown in FIG. 5, the H-PCF network element and the AM-PCF network element shown in FIG. 7A are respectively the H-AM-PCF network element and the V-AM-PCF network element shown in FIG. 5. Correspondingly, that the AM-PCF network element sends the second URSP policy query request message to the H-PCF network element, and receives the second URSP policy query response message from the H-PCF network element may be specifically implemented as follows: The V-AM-PCF network element sends the second URSP policy query request message to the H-AM-PCF network element through an N24 interface, and receives the second URSP policy query response message from the H-AM-PCF network element through the N24 interface. The H-AM-PCF network element may query the URSP policy information from the terminal policy context locally cached by the H-AM-PCF network element, or obtain the URSP policy information from the UDR network element. For a specific implementation, refer to the foregoing related descriptions. Details are not described herein again.

S703: The AMF network element sends a second PDU session establishment/modification request message to the SMF network element.

The second session establishment/modification request message carries the URSP policy information, N1 SM information, and a session management context identifier (SM context identifier). Optionally, the second session establishment/modification request message may further carry the URSP identification information.

For example, if the URSP policy information obtained by the AMF network element through querying includes only one or more pieces of RSD information, in other words, the URSP policy information is the URSP policy information 1 the AMF network element needs to use the second PDU session establishment/modification request message to carry both the URSP policy information 1 and the URSP identification information 1. In other words, the second PDU session establishment/modification request message needs to carry both one or more pieces of RSD information and traffic descriptor information from the terminal.

For example, if the URSP policy information obtained by the AMF network element through querying is the URSP policy information 2, namely, the traffic descriptor information corresponding to the URSP rule identified by the URSP rule identifier, and one or more pieces of RSD information, the AMF network element may use the second PDU session establishment/modification request message to carry only the URSP policy information 2. In other words, the second PDU session establishment/modification request message does not need to carry the URSP identification information 2, namely, the URSP rule identifier.

For example, if the URSP policy information obtained by the AMF network element through querying includes only the URSP policy information 3, in other words, includes only one or more pieces of traffic descriptor information, the AMF network element needs to use the second PDU session establishment/modification request message to carry the URSP policy information 3 and the URSP identification information 3, to be specific, a DNN, S-NSSAI, an SSC mode, a PDU session type, an access type, and the like that are sent by the terminal.

S704: The SMF network element determines, based on the URSP policy information, whether to accept the second session establishment/modification request message, in other words, determines whether to accept the PDU session establishment/modification request initiated by the terminal.

In a possible design method, the SMF network element determines, based on the URSP policy information, whether to accept a second session request message.

Optionally, the second session request message may further carry the URSP identification information, for example, some or all session configuration information. The SMF network element determines, based on the URSP identification information, whether the URSP policy information carried in the second session request message is incorrect. Correspondingly, that the foregoing session management network element determines, based on the URSP policy information, whether to accept the second session request message may include: The session management network element determines whether the session configuration information matches the URSP policy information.

If the session configuration information matches the URSP policy information, the SMF network element accepts the second PDU session establishment/modification request message, in other words, accepts the PDU session establishment/modification request initiated by the terminal, and S705 is performed.

If the session configuration information does not match the URSP policy information, the SMF network element rejects the second PDU session establishment/modification request message, in other words, rejects the PDU session establishment/modification request initiated by the terminal, and S708 is performed.

S705: The SMF network element sends a session policy control association establishment/modification request message to the SM-PCF network element.

The session policy control association establishment/modification request message may carry some or all content of the URSP policy information. For example, the session policy control association establishment/modification request message may carry only one or more pieces of traffic descriptor information in the URSP policy information.

S706: The SM-PCF network element formulates a policy rule based on the URSP policy information.

For example, the policy rule may include one or more of the following: a policy and charging control (policy and charging control, PCC) rule, a subscription event, and a PDU session policy. The PCC rule is used to indicate the SMF network element to configure a resource for a data flow corresponding to the traffic descriptor information. The subscription event is used to indicate the SMF network element or the UPF network element to detect and report a data flow start event and/or a data flow end event of a PDU session. The PDU session policy is used to indicate the SMF network element to configure a resource for a PDU session.

S707: The SM-PCF network element sends a session policy control association establishment/modification response message to the SMF network element.

The session policy control association establishment/modification response message carries the formulated policy rule.

S708: The SMF network element sends a first PDU session establishment/modification response message to the terminal through the AMF network element.

For example, with reference to S705, if the SMF network element determines that the second PDU session establishment/modification request message needs to be rejected, the SMF network element returns, to the terminal through the AMF network element, a second PDU session establishment/modification response message that carries a rejection indication and a cause value. The cause value may be a definition that the terminal does not follow a URSP rule, for example, does not follow the URSP rule shown in Table 1 and Table 2.

For example, with reference to S705, if the SMF network element determines that the second PDU session establishment/modification request message can be accepted, the SMF network element returns, to the terminal through the AMF network element, a second PDU session establishment/modification response message that carries the formulated policy rule.

For technical effects of the communications method applicable to the PDU session establishment/modification procedure shown in FIG. 7A and FIG. 7B, refer to related descriptions of technical effects of the communications system shown in FIG. 1. Details are not described herein again.

FIG. 8 is a schematic diagram 2 of a PDU session establishment/modification procedure according to an embodiment of this application. The PDU session establishment/modification procedure may be used to implement the communications method provided in the embodiments of this application, to complete communication between the session management network element 201 and the second policy control entity 202 in the communications system 200 shown in FIG. 2.

With reference to FIG. 3 to FIG. 5, the session management network element 201 and the second policy control entity 202 shown in FIG. 2 may be respectively the SMF network element and the SM-PCF network element in the non-roaming scenario shown in FIG. 3, or the H-SMF network element and the H-SM-PCF network element in the HR roaming scenario shown in FIG. 4, or the SMF network element and the V-SM-PCF network element in the LBO roaming scenario shown in FIG. 5.

In addition, the communications system 200 shown in FIG. 2 further relates to a first policy control entity. With reference to FIG. 3 to FIG. 5, the first policy control entity may be the AM-PCF network element in the non-roaming scenario shown in FIG. 3, the H-AM-PCF network element in the HR roaming scenario shown in FIG. 4, or the V-AM-PCF network element in the LBO roaming scenario shown in FIG. 5.

In descriptions of steps of the PDU session establishment/modification procedure shown in FIG. 8, the SMF network element shown in FIG. 3, the H-SMF network element shown in FIG. 4, and the SMF network element shown in FIG. 5 are collectively referred to as an SMF network element. The AM-PCF network element shown in FIG. 3, the H-AM-PCF network element shown in FIG. 4, and the V-AM-PCF network element shown in FIG. 5 are collectively referred to as an AM-PCF network element. The SM-PCF network element shown in FIG. 3, the H-SM-PCF network element shown in FIG. 4, and the V-SM-PCF network element shown in FIG. 5 are collectively referred to as an SM-PCF network element. The SMF network element, the AM-PCF network element, and the SM-PCF network element are used as an example below to describe in detail the PDU session establishment/modification procedure shown in FIG. 8.

As shown in FIG. 8, the PDU session establishment/modification procedure includes the following steps:
S801: A terminal sends a third PDU session establishment/modification request message to the SMF network element through an AMF network element (not shown in FIG. 8).

The third PDU session establishment/modification request message carries URSP identification information and PDU session configuration information. For content of the URSP identification information and the PDU session configuration information, refer to related descriptions of S701. Details are not described herein again.

S802: The SMF network element sends a PDU session policy control association request message to the SM-PCF network element. The PDU session policy control association request message carries the URSP identification information.

S803: The SM-PCF network element obtains the URSP policy information based on the URSP identification information.

For a correspondence between the URSP policy information and the URSP identification information, and content of the URSP policy information, refer to related descriptions of S702. Details are not described herein again.

In a possible design method, S803 in which the SM-PCF network element obtains the URSP policy information based on the URSP identification information may include:
The SM-PCF network element obtains the URSP policy information from a network storage network element based on the URSP identification information. Alternatively, the SM-PCF network element obtains the URSP policy information from the first policy control entity based on the URSP identification information.

For example, the network storage network element may be a UDR network element. Therefore, optionally, that the SM-PCF network element obtains the URSP policy information from a network storage network element based on the URSP identification information may be specifically implemented as follows:
S803A: The SM-PCF network element obtains the URSP policy information from the UDR network element based on the URSP identification information.

Specifically, the SM-PCF network element may send, to the UDR network element, a third URSP policy query request message that carries the URSP identification information, and then receive a third URSP policy query response message that is from the UDR network element and that carries the URSP policy information.

It should be noted that the solution of obtaining the URSP policy information from the UDR network element in S803A may be applied to the scenarios shown in FIG. 3 and FIG. 4. For example, in the non-roaming scenario shown in FIG. 3, the SM-PCF network element shown in FIG. 8 is the SM-PCF network element shown in FIG. 3. Correspondingly, that the SM-PCF network element may send, to the UDR network element, a third URSP policy query request message that carries the URSP identification information, and then receive a third URSP policy query response message that is from the UDR network element and that carries the URSP policy information may be specifically implemented as follows: The SM-PCF network element sends the third URSP policy query request message to the UDR network element through an N36 interface, and receives the third URSP policy query response message from the UDR network element through the N36 interface.

For example, in the HR roaming scenario shown in FIG. 4, the SM-PCF network element shown in FIG. 8 is the H-SM-PCF network element shown in FIG. 4. Correspondingly, that the SM-PCF network element may send, to the UDR network element, a third URSP policy query request message that carries the URSP identification information, and then receive a third URSP policy query response message that is from the UDR network element and that carries the URSP policy information may be specifically implemented as follows: The H-SM-PCF network element sends the third URSP policy query request message to the UDR network element through an N36 interface, and receives the third URSP policy query response message from the UDR network element through the N36 interface.

For example, the SM-PCF network element may request, based on URSP identification information 1, namely, a URSP rule identifier, the UDR network element to query URSP policy information 2 corresponding to the terminal, namely, traffic descriptor information, and one or more RSDs. For another example, the SM-PCF network element may alternatively request, based on URSP identification information 2, namely, traffic descriptor information, the UDR network element to query URSP policy information 2 corresponding to the terminal, namely, one or more RSDs corresponding to the traffic descriptor information. For another example, the SM-PCF network element may alternatively request, based on URSP identification information 3, namely, some or all content of a configured URSP rule, the UDR network element to query URSP policy information 3 corresponding to the terminal, namely, one or more pieces of traffic descriptor information corresponding to the configured URSP rule.

For example, that the SM-PCF network element obtains the URSP policy information from the first policy control entity based on the URSP identification information may be specifically implemented as follows:
S803B: The SM-PCF network element obtains the URSP policy information from the AM-PCF network element based on the URSP identification information.

For example, the SM-PCF network element sends, to the AM-PCF network element, a fourth URSP policy query request message that carries the URSP identification information, and receives a fourth URSP policy query response message that is from the AM-PCF network element and that carries the URSP policy information.

It should be noted that, the solution of obtaining the URSP policy information from the AM-PCF network element in S803B may be applied to any scenario shown in FIG. 3 to FIG. 5. For example, in the non-roaming scenario shown in FIG. 3, the SM-PCF network element and the AM-PCF network element shown in FIG. 8 are respectively the SM-PCF network element and the AM-PCF network element shown in FIG. 3. Correspondingly, that the SM-PCF network element sends, to the AM-PCF network element, a fourth URSP policy query request message that carries the URSP identification information, and receives a fourth URSP policy query response message that is from the AM-PCF network element and that carries the URSP policy information may be specifically implemented as follows: The SM-PCF network element sends the fourth URSP policy query request message to the AM-PCF network element through an N24 interface, and receives the fourth URSP policy query response message from the AM-PCF network element through the N24 interface. Optionally, the SM-PCF network element and the AM-PCF network element may alternatively interact through an interface other than the N24 interface. This is not limited in the present invention.

For example, in the HR roaming scenario shown in FIG. 4, the SM-PCF network element and the AM-PCF network element shown in FIG. 8 are respectively the H-SM-PCF network element and the H-AM-PCF network element shown in FIG. 4. Correspondingly, that the SM-PCF network element sends, to the AM-PCF network element, a fourth URSP policy query request message that carries the URSP identification information, and receives a fourth URSP policy query response message that is from the AM-PCF network element and that carries the URSP policy information may be specifically implemented as follows: The H-SM-PCF network element sends the fourth URSP policy query request message to the H-AM-PCF network element through an N24 interface, and receives the fourth URSP policy query response message from the H-AM-PCF network element through the N24 interface. Optionally, the SM-PCF and the AM-PCF may alternatively interact through an interface other than the N24 interface. This is not limited in the present invention.

For example, in the LBO roaming scenario shown in FIG. 5, the SM-PCF network element and the AM-PCF network element shown in FIG. 8 are respectively the V-SM-PCF network element and the V-AM-PCF network element shown in FIG. 5. Correspondingly, that the SM-PCF network element sends, to the AM-PCF network element, a fourth URSP policy query request message that carries the URSP identification information, and receives a fourth URSP policy query response message that is from the AM-PCF network element and that carries the URSP policy information may be specifically implemented as follows: The V-SM-PCF network element sends the fourth URSP policy query request message to the V-AM-PCF network element through an N24 interface, and receives the fourth URSP policy query response message from the V-AM-PCF network element through the N24 interface. Optionally, the SM-PCF and the AM-PCF may alternatively interact through an interface other than the N24 interface. This is not limited in the present invention. The V-AM-PCF network element may obtain the URSP policy information from the H-AM-PCF network element. It is easily understood that, for a specific implementation in which the H-AM-PCF network element obtains the URSP policy information, refer to related descriptions of S702C and S702E. Details are not described herein again.

In a possible design method, before S803B in which the SM-PCF network element obtains the URSP policy information from the AM-PCF network element based on the URSP identification information is performed, the PDU session establishment/modification procedure may further include the following content:
The SM-PCF network element obtains identification information of the first policy control entity from a session management network element. Alternatively, the SM-PCF network element obtains identification information of the first policy control entity from a binding support network element. The first policy control entity may be the AM-PCF network element in the non-roaming scenario shown in FIG. 3, the H-AM-PCF network element in the HR roaming scenario shown in FIG. 4, or the V-AM-PCF network element in the LBO scenario shown in FIG. 5.

Because the AM-PCF network element and the SM-PCF network element are both located in a same PLMN. To be specific, in the LBO roaming scenario shown in FIG. 5, both the AM-PCF network element and the SM-PCF network element are located in the VPLMN. However, in the non-roaming scenario shown in FIG. 3 and the HR roaming scenario shown in FIG. 4, both the AM-PCF network element and the SM-PCF network element are located in the HPLMN. Correspondingly, that the SM-PCF network element obtains identification information of the AM-PCF network element from the SMF network element may include one of the following:

Manner 1: If the AMF network element determines, based on the URSP identification information/session configuration message, that a URSP check needs to be performed, the AMF network element actively sends the identification information of the AM-PCF network element to the SMF network element. The identification information of the AM-PCF network element may include both identification information of the H-AM-PCF network element and identification information of the V-AM-PCF network element, or may include only information about an AM-PCF network element that located in a same PLMN as the SM-PCF network element. Then, the SMF network element sends the obtained identification information of the AM-PCF network element and the URSP identification information from the SM-PCF network element. In other words, in Manner 1, the AMF network element actively obtains the identification information of the AM-PCF network element, and provides the identification information for the SM-PCF network element through the SMF.

It should be noted that, when the URSP identification information is content carried in an N1 SM message in the URSP identification information 3, and the N1 SM message is transparently transmitted to the SMF network element through only the AMF network element, the AMF network element does not parse the content of the N1 SM message. In other words, in the scenario in which the N1 SM message is transparently transmitted, the AMF network element cannot perform Manner 1. In this scenario, an operation of determining, based on the URSP identification information/session configuration message, whether to perform the URSP check may be performed by the SMF network element or the SM-PCF network element. In other words, Manner 2 and Manner 3 are performed.

Manner 2: If the SMF network element determines, based on the URSP identification information/session configuration message, that a URSP check needs to be performed, the SMF network element actively obtains the identification information of the AM-PCF network element from the AMF network element, and sends the obtained identification information of the AM-PCF network element to the SM-PCF network element. The identification information of the AM-PCF network element may include both identification information of the H-AM-PCF network element and identification information of the V-AM-PCF network element, or may include only information about an AM-PCF network element that located in a same PLMN as the SM-PCF network element. In other words, in Manner 2, the SMF network element actively obtains the identification information of the AM-PCF network element, and provides the identification information for the SM-PCF network element.

Manner 3: If the SM-PCF network element determines, based on the URSP identification information/session configuration message, that a URSP check needs to be performed, the SM-PCF network element actively requests the identification information of the AM-PCF network element from the AMF network element through the SMF network element, and receives the identification information that is of the AM-PCF network element and that is sent by the AMF network element through the SMF network element. The identification information of the AM-PCF network element may include both identification information of the H-AM-PCF network element and identification information of the V-AM-PCF network element, or may include only information about an AM-PCF network element that located in a same PLMN as the SM-PCF network element. In other words, in Manner 3, the SM-PCF network element actively obtains the identification information of the AM-PCF network element from the AMF network element through the SMF network element.

It is easily understood that, in a scenario in which the AM-PCF network element supports registration of the identification information of the AM-PCF network element with the binding support network element, for example, a BSF network element, that the SM-PCF network element obtains identification information of the first policy control entity from a binding support network element may be specifically implemented as follows:
Manner 4: When the AM-PCF network element registers an address of the AM-PCF network element with the BSF network element, the address may further carry identification information of the terminal. In this case, the SM-PCF network element may obtain, from the BSF network element by using the identifier of the terminal as a query condition, the identification information that is of the AM-PCF network element and that corresponds to the identifier of the terminal.

After S803 is performed to obtain the URSP policy information, S804 continues to be performed if the SM-PCF network element determines whether to accept the PDU session policy control association request message; or S806 is directly performed if the SM-PCF network element does not determine whether to accept the PDU session policy control association request message.

S804: The SM-PCF network element determines, based on the URSP policy information, whether to accept the PDU session policy control association request message.

In a possible design method, S804 in which the SM-PCF network element determines, based on the URSP policy information, whether to accept the PDU session policy control association request message may include: The SM-PCF network element determines, based on the URSP policy information, to accept the PDU session policy control association request message. Alternatively, the SM-PCF network element determines, based on the URSP policy information, to reject the PDU policy control association request message. S805 continues to be performed if the PDU session policy control association request message is accepted; or S806 is directly performed if the PDU session policy control association request message is not accepted.

Optionally, the PDU policy control association request message may further carry session configuration information. Correspondingly, that the SM-PCF network element determines, based on the URSP policy information, to accept policy control request message may include: The SM-PCF network element determines that the session configuration information matches the URSP policy information. For content and a matching method of the session configuration information, respectively refer to related descriptions of S701 and S704. Details are not described herein again.

S805: The SM-PCF network element formulates a policy rule based on the URSP policy information.

S806: The SM-PCF network element sends a PDU session policy control association response message to the SMF network element. The PDU session policy control association response message may carry the policy rule or the URSP policy information.

For content of the policy rule, refer to related descriptions of S706. Details are not described herein again.

Optionally, if the SM-PCF network element determines to accept the PDU session policy control association request message in S804, and S805 is performed, the PDU session policy control association response message may carry only the policy rule, and does not need to carry the URSP policy information.

Optionally, if the SM-PCF network element determines to reject the PDU session policy control association request message in S804, S805 does not need to be performed, and the PDU session policy control association response message needs to carry only a rejection indication and a cause value, and does not need to carry the policy rule or the URSP policy information.

Optionally, if S803 and S804 are not performed, the PDU session policy control association response message needs to carry the policy rule, and S808 is directly performed.

S807: The SMF network element determines, based on the URSP policy information, whether to accept the third PDU session establishment/modification request message.

For a specific method, refer to related descriptions of S804 in which the SM-PCF network element determines whether to accept the PDU session policy control association request message, or refer to related descriptions of S704 in which the SMF network element determines, based on the URSP policy information, whether to accept the second PDU session establishment/modification request message. Details are not described herein again.

S808: The SMF network element sends the third PDU session establishment/modification request message to the terminal through the AMF network element.

The third PDU session establishment/modification request message carries the policy rule. For a specific implementation, refer to related descriptions of the second PDU session establishment/modification request message in S708. Details are not described herein again.

For technical effects of the communications method applicable to the PDU session establishment/modification procedure shown in FIG. 8, refer to the technical effects of the communications system shown in FIG. 2. Details are not described herein again.

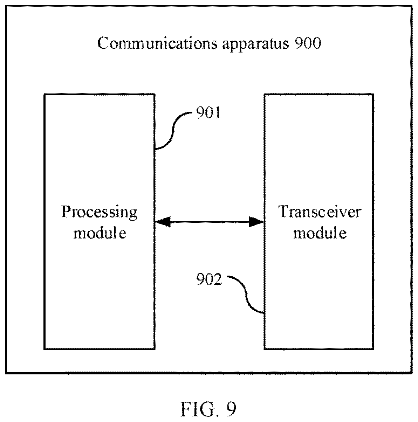

The communications methods provided in the embodiments of this application are described above in detail with reference to FIG. 7A, FIG. 7B, and FIG. 8. The following describes in detail a communications apparatus provided in the embodiments of this application with reference to FIG. 9.

FIG. 9 is a schematic diagram 2 of a structure of a communications apparatus according to an embodiment of this application. The communications apparatus may be applied to the communications system shown in any one of FIG. 1 and FIG. 3 to FIG. 5, and perform a function of a mobility management network element in the communications method shown in FIG. 7A and FIG. 7B. For ease of description, FIG. 9 shows only main components of the communications apparatus.

As shown in FIG. 9, the communications apparatus 900 includes a processing module 901 and a transceiver module 902.

The transceiver module 902 is configured to receive a first session request message from a terminal, for example, the foregoing first PDU session establishment/modification request message. The first session request message carries user route selection policy (URSP) identification information.

The processing module 901 is configured to obtain URSP policy information based on the URSP identification information.

The transceiver module 902 is further configured to send a second session request message, for example, the foregoing second PDU session establishment/modification request message, to a session management network element. The second session request message carries the URSP policy information, and the URSP policy information is used to formulate a policy rule for the terminal.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier. Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

In a possible design, the processing module 901 is further configured to control, based on the URSP identification information, the transceiver module 902 to obtain the URSP policy information from a first policy control entity. Alternatively, optionally, the processing module 901 is further configured to obtain the URSP policy information from a local cache of the mobility management network element based on the URSP identification information.

Further, the second session request message may further carry the URSP identification information, so that the session management network element determines, based on the URSP identification information, whether the URSP policy information carried in the second session request message is incorrect.

Optionally, the communications apparatus 900 may further include a storage module (not shown in FIG. 9). The storage module stores a program or instructions. When the processing module 901 executes the program or the instructions, the communications apparatus 900 performs the function of the mobility management network element in the communications method shown in FIG. 7A and FIG. 7B.

It should be noted that the communications apparatus 900 may be a mobility management network element, for example, an AMF network element, or may be a chip or a chip system disposed in the mobility management network element. This is not limited in this application.

The communications apparatus 900 shown in FIG. 9 may also be applied to a function of a session management network element in the communications system shown in any one of FIG. 1 and FIG. 3 to FIG. 5, for example, perform a function of an AMF network element in the PDU session establishment/modification procedure shown in FIG. 7A and FIG. 7B. Detailed descriptions are provided below.

The transceiver module 902 is configured to receive a second session request message from a mobility management network element. The second session request message carries URSP policy information.

The processing module 901 is configured to determine, based on the URSP policy information, to accept the second session request message.

The transceiver module 902 is further configured to send a policy control request message to a second policy control entity. The policy control request message carries the URSP policy information, and the URSP policy information is used to formulate a policy rule for a terminal.

The URSP policy information may include one or more of the following: traffic descriptor information and one or more pieces of route selection descriptor (RSD) information corresponding to the traffic descriptor information.

In a possible design, the second session request message may further carry session configuration information. Correspondingly, the processing module 901 is further configured to determine that the session configuration information matches the URSP policy information.

In a possible design, the transceiver module 902 is further configured to receive a policy control response message from the second policy control entity. The policy control response message carries the policy rule.

Further, the second session request message further carries URSP identification information, so that the session management network element determines, based on the URSP identification information, whether the URSP policy information carried in the second session request message is incorrect. For example, the URSP identification information may include one or more of the following: a URSP rule identifier, traffic descriptor information, a data network name (DNN), single network slice selection assistance information (S-NSSAI), a session and service continuity (SSC) mode, a session type, and an access type.

Optionally, the communications apparatus 900 may further include a memory. The storage module stores a program or instructions. When the processing module 901 executes the program or the instructions, the communications apparatus 900 performs a function of a session management network element in the communications system shown in FIG. 1, for example, performs a function of an SMF network element in the PDU session establishment/modification procedure shown in FIG. 7A and FIG. 7B.

It should be noted that, the communications apparatus 900 may be a session management network element, or may be a chip or a chip system disposed in the session management network element. This is not limited in this application.

The communications apparatus 900 shown in FIG. 9 may be further configured to perform a function of the second policy control entity 202 in the communications system shown in any one of FIG. 2 to FIG. 5, for example, perform a function of an SM-PCF network element in the PDU session establishment/modification procedure shown in FIG. 8. Detailed descriptions are provided below.

The transceiver module 902 is configured to receive a policy control request message from a session management network element. The policy control request message carries URSP identification information.

The processing module 901 is configured to obtain URSP policy information based on the URSP identification information. The URSP policy information is used to formulate a policy rule for a terminal.

The transceiver module 902 is further configured to send a policy control response message to the session management network element. The policy control response message carries the policy rule.

For example, the URSP identification information may be traffic descriptor information. Correspondingly, the URSP policy information may include one or more pieces of route selection descriptor (RSD) information corresponding to the traffic descriptor information.

Alternatively, optionally, the URSP identification information may be a URSP rule identifier. Correspondingly, the URSP policy information may include traffic descriptor information corresponding to a URSP rule identified by the URSP rule identifier, and one or more pieces of route selection descriptor (RSD) information.

Alternatively, optionally, the URSP identification information may include one or more of the following: a data network name (DNN), single network slice selection assistance information (S-NSSAI), a session and service continuity (SSC) mode, a session type, and an access type. Correspondingly, the URSP policy information may include one or more pieces of traffic descriptor information matching the URSP identification information.

In a possible design, the processing module 901 is further configured to control, based on the URSP identification information, the transceiver module 902 to obtain the URSP policy information from a first policy control entity.

Alternatively, optionally, the processing module 901 is further configured to control, based on the URSP identification information, the transceiver module 902 to obtain the URSP policy information from a network storage network element.

In a possible design, the processing module 901 is further configured to: before controlling, based on the URSP identification information, the transceiver module 902 to obtain the URSP policy information from the first policy control entity, control the transceiver module 902 to obtain identification information of the first policy control entity from the session management network element.

Alternatively, optionally, the processing module 901 is further configured to: before controlling, based on the URSP identification information, the transceiver module 902 to obtain the URSP policy information from the first policy control entity, control the transceiver module 902 to obtain identification information of the first policy control entity from a binding support network element.

In a possible design, the processing module 901 is further configured to: before controlling the control transceiver module 902 to send the policy control response message to the session management network element, determine, based on the URSP policy information, to accept the policy control request message.

Further, the policy control request message may further carry session configuration information. Correspondingly, the processing module 901 is further configured to determine that the session configuration information matches the URSP policy information.

Optionally, the communications apparatus 900 may further include a memory. The storage module stores a program or instructions. When the processing module 901 executes the program or the instructions, the communications apparatus 900 performs a function of the second policy control entity 202 in the communications system shown in FIG. 2, for example, performs a function of an SM-PCF network element in the PDU session establishment/modification procedure shown in FIG. 8.

It should be noted that the communications apparatus 900 may be a second policy control entity, for example, an SM-PCF network element, or may be a chip or a chip system disposed in the second policy control entity. This is not limited in this application.

In addition, for technical effects of the communications apparatus 900 shown in FIG. 9, refer to the technical effects of the communications system 100 shown in FIG. 1, or refer to the technical effects of the communications system 200 shown in FIG. 2. Details are not described herein again.

An embodiment of this application provides a chip system. The chip system includes a processor and an input/output port. The processor is configured to implement a processing function in the foregoing method embodiments, and the input/output port is configured to implement a transceiver function in the foregoing method embodiments.

In a possible design, the chip system further includes a memory. The memory is configured to store program instructions and data for implementing functions in the foregoing method embodiments.

The chip system may include one or more chips, or may include a chip and another discrete component.

An embodiment of this application provides a computer-readable storage medium. The computer-readable storage medium stores computer instructions. When the computer instructions are run on a computer, the computer is enabled to perform a communications method in the foregoing method embodiments.

An embodiment of this application provides a computer program product including instructions. The computer program product includes a computer program or the instructions. When the computer program or instructions are run on a computer, the computer is enabled to perform a communications method in the foregoing method embodiments.

It should be understood that, the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. According to description used as an example instead of a limitation, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the embodiments, all or some of the foregoing embodiments may be implemented in a form of a computer program product. The computer program product includes one or more computer instructions or computer programs. When the computer instructions or the computer programs are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave) manner. The computer-readable storage medium may be any usable medium accessible by the computer, or a data storage device, such as a server or a data center, including one or more usable medium sets. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between associated objects, or may represent an "and/or" relationship. For details, refer to foregoing and following descriptions for understanding.

In this application, "at least one" refers to one or more, and "a plurality of" refers to two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiment is merely an example. For example, the division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communications method, comprising:
receiving, by a mobility management network element (101), a first session request message from a terminal, wherein the first session request message carries user route selection policy, URSP, identification information;
obtaining, by the mobility management network element (101), URSP policy information from a first policy control entity based on the URSP identification information; and
sending, by the mobility management network element (101), a second session request message to a session management network element (102, 201), wherein the second session request message carries the URSP policy information, and the URSP policy information is to be used to formulate a policy rule for the terminal by a second policy control entity (202).

2. The communications method according to claim 1, wherein the URSP identification information is traffic descriptor information, and the URSP policy information comprises one or more pieces of route selection descriptor, RSD, information corresponding to the traffic descriptor information.

3. The communications method according to claim 1, wherein the URSP identification information is a URSP rule identifier, and the URSP policy information comprises traffic descriptor information corresponding to a URSP rule identified by the URSP rule identifier, and one or more pieces of RSD information.

4. The communications method according to claim 1, wherein the URSP identification information comprises one or more of the following: a data network name, DNN, single network slice selection assistance information, S-NSSAI, a session and service continuity, SSC, mode, a session type, and an access type, and the URSP policy information comprises one or more pieces of traffic descriptor information matching the URSP identification information

5. A communications method, comprising:
receiving, by a session management network element (102, 201), a second session request message from a mobility management network element (101), wherein the second session request message carries URSP policy information;
determining, by the session management network element (102, 201) based on the URSP policy information, to accept the second session request message; and
sending, by the session management network element (102, 201), a policy control request message to a second policy control entity (202), wherein the policy control request message carries the URSP policy information, and the URSP policy information is to be used to formulate a policy rule for a terminal by the second policy control entity (202).

6. The communications method according to claim 5, wherein the URSP policy information comprises one or more of the following: traffic descriptor information and one or more pieces of route selection descriptor, RSD information corresponding to the traffic descriptor information.

7. The communications method according to claim 5 or 6, wherein the second session request message further carries session configuration information; and
the determining, by the session management network element (102, 201) based on the URSP policy information, to accept the second session request message comprises:
determining, by the session management network element (102, 201), that the session configuration information matches the URSP policy information.

8. The communications method according to any one of claims 5 to 7, wherein the second session request message further carries URSP identification information, and wherein the URSP identification information comprises one or more of the following: a URSP rule identifier, traffic descriptor information, a data network name, DNN, single network slice selection assistance information, S-NSSAI, a session and service continuity, SSC, mode, a session type, and an access type.

9. A communications method, comprising:
receiving, by a second policy control entity (202), a policy control request message from a session management network element (102, 201), wherein the policy control request message carries URSP identification information;
obtaining, by the second policy control entity (202), URSP policy information based on the URSP identification information, wherein the URSP policy information is used to formulate a policy rule for a terminal; and
sending, by the second policy control entity (202), a policy control response message to the session management network element (102, 201), wherein the policy control response message carries the policy rule.

10. The communications method according to claim 9, wherein the obtaining, by the second policy control entity (202), URSP policy information based on the URSP identification information comprises one of the following:
obtaining, by the second policy control entity (202), the URSP policy information from a first policy control entity based on the URSP identification information; and
obtaining, by the second policy control entity (202), the URSP policy information from a network storage network element based on the URSP identification information

11. The communications method according to any one of claims 9 to 10, wherein the URSP identification information is a URSP rule identifier, and the URSP policy information comprises traffic descriptor information corresponding to a URSP rule identified by the URSP rule identifier, and one or more pieces of route selection descriptor, RSD information.

12. The communications method according to any one of claims 9 to 11, wherein the URSP identification information is traffic descriptor information, and the URSP policy information comprises one or more pieces of RSD information corresponding to the traffic descriptor information.

13. A device, comprising means configured to perform the steps of the communications method of any one of claims 1 to 12.

14. A communications system, comprising a mobility management network element (101) and a session management network element (102, 201), wherein
the mobility management network element (101) is configured to obtain URSP policy information from a first policy control entity based on user route selection policy, URSP, identification information, wherein the URSP identification information is carried in a first session request message from a terminal;
the mobility management network element (101) is further configured to send a second session request message to the session management network element (102, 201), wherein the second session request message carries the URSP policy information;
the session management network element (102, 201) is configured to receive the second session request message; and
the session management network element (102, 201) is further configured to send a policy control request message to a second policy control entity (202), wherein the policy control request message carries the URSP policy information, and the URSP policy information is used to formulate a policy rule for the terminal by the second policy control entity (202).

15. The communications system according to claim 14, further comprising the second policy control entity (202), wherein
the second policy control entity (202) is configured to receive the policy control request message from the session management network element (102, 201), wherein the policy control request message carries the URSP identification information;
the second policy control entity (202) is further configured to obtain the URSP policy information based on the URSP identification information;
the second policy control entity (202) is further configured to send a policy control response message to the session management network element (102, 201), wherein the policy control response message carries the policy rule; and
the session management network element (102, 201) is further configured to receive the policy control response message from the second policy control entity (202).

## Patentansprüche

1. Kommunikationsverfahren, das umfasst:
Empfangen, durch ein Mobilitätsverwaltungsnetzelement (101), einer ersten Sitzungsanforderungsnachricht von einem Endgerät, wobei die erste Sitzungsanforderungsnachricht Benutzerroutenauswahlrichtlinien(URSP)-Identifikationsinformationen trägt;
Erhalten, durch das Mobilitätsverwaltungsnetzelement (101), von URSP-Richtlinieninformationen von einer ersten Richtliniensteuerungseinheit basierend auf den URSP-Identifikationsinformationen; und
Senden, durch das Mobilitätsverwaltungsnetzelement (101), einer zweiten Sitzungsanforderungsnachricht an ein Sitzungsverwaltungsnetzelement (102, 201), wobei die zweite Sitzungsanforderungsnachricht die URSP-Richtlinieninformationen trägt und die URSP-Richtlinieninformationen verwendet werden sollen, um eine Richtlinienregel für das Endgerät durch eine zweite Richtliniensteuerungseinheit (202) zu formulieren.

2. Kommunikationsverfahren nach Anspruch 1, wobei die URSP-Identifikationsinformationen Verkehrsdeskriptorinformationen sind und die URSP-Richtlinieninformationen eine oder mehrere Routenauswahldeskriptor(RSD)-Informationen, die den Verkehrsdeskriptorinformationen entsprechen, umfassen.

3. Kommunikationsverfahren nach Anspruch 1, wobei die URSP-Identifikationsinformationen eine URSP-Regelkennung sind und die URSP-Richtlinieninformationen Verkehrsdeskriptorinformationen, die einer URSP-Regel entsprechen, die durch die URSP-Regelkennung identifiziert wird, und eine oder mehrere RSD-Informationen umfassen.

4. Kommunikationsverfahren nach Anspruch 1, wobei die URSP-Identifikationsinformationen eines oder mehrere der Folgenden umfassen: einen Datennetznamen, DNN, Einzelnetz-Slice-Auswahlunterstützungsinformationen, S-NSSAI, einen Sitzungs- und Dienstkontinuitäts(SSC)-Modus, einen Sitzungstyp und einen Zugriffstyp, und die URSP-Richtlinieninformationen eine oder mehrere Verkehrsdeskriptorinformationen, die mit den URSP-Identifikationsinformationen übereinstimmen, umfassen.

5. Kommunikationsverfahren, das umfasst:
Empfangen, durch ein Sitzungsverwaltungsnetzelement (102, 201), einer zweiten Sitzungsanforderungsnachricht von einem Mobilitätsverwaltungsnetzelement (101), wobei die zweite Sitzungsanforderungsnachricht URSP-Richtlinieninformationen trägt; Bestimmen, durch das Sitzungsverwaltungsnetzelement (102, 201) basierend auf den URSP-Richtlinieninformationen, die zweite Sitzungsanforderungsnachricht zu akzeptieren; und
Senden, durch das Sitzungsverwaltungsnetzelement (102, 201), einer Richtliniensteuerungsanforderungsnachricht an eine zweite Richtliniensteuerungseinheit (202), wobei die Richtliniensteuerungsanforderungsnachricht die URSP-Richtlinieninformationen trägt und die URSP-Richtlinieninformationen verwendet werden sollen, um eine Richtlinienregel für ein Endgerät durch die zweite Richtliniensteuerungseinheit (202) zu formulieren.

6. Kommunikationsverfahren nach Anspruch 5, wobei die URSP-Richtlinieninformationen eines oder mehrere der Folgenden umfassen: Verkehrsdeskriptorinformationen und eine oder mehrere Routenauswahldeskriptor(RSD)-Informationen, die den Verkehrsdeskriptorinformationen entsprechen.

7. Kommunikationsverfahren nach Anspruch 5 oder 6, wobei die zweite Sitzungsanforderungsnachricht ferner Sitzungskonfigurationsinformationen trägt; und Bestimmen, durch das Sitzungsverwaltungsnetzelement (102, 201) basierend auf den URSP-Richtlinieninformationen, die zweite Sitzungsanforderungsnachricht zu akzeptieren, umfasst:
Bestimmen, durch das Sitzungsverwaltungsnetzelement (102, 201), dass die Sitzungskonfigurationsinformationen mit den URSP-Richtlinieninformationen übereinstimmen.

8. Kommunikationsverfahren nach einem der Ansprüche 5 bis 7, wobei die zweite Sitzungsanforderungsnachricht ferner URSP-Identifikationsinformationen trägt und wobei die URSP-Identifikationsinformationen eines oder mehrere der Folgenden umfassen: eine URSP-Regelkennung, Verkehrsdeskriptorinformationen, einen Datennetznamen, DNN, Einzelnetz-Slice-Auswahlunterstützungsinformationen, S-NSSAI, einen Sitzungs- und Dienstkontinuitäts(SSC)-Modus, einen Sitzungstyp und einen Zugriffstyp.

9. Kommunikationsverfahren, das umfasst:
Empfangen, durch eine zweite Richtliniensteuerungseinheit (202), einer Richtliniensteuerungsanforderungsnachricht von einem
Sitzungsverwaltungsnetzelement (102, 201), wobei die Richtliniensteuerungsanforderungsnachricht URSP-Identifikationsinformationen trägt;
Erhalten, durch die zweite Richtliniensteuerungseinheit (202), von URSP-Richtlinieninformationen basierend auf den URSP-Identifikationsinformationen, wobei die URSP-Richtlinieninformationen verwendet werden, um eine Richtlinienregel für ein Endgerät zu formulieren; und
Senden, durch die zweite Richtliniensteuerungseinheit (202), einer Richtliniensteuerungsantwortnachricht an das Sitzungsverwaltungsnetzelement (102, 201), wobei die Richtliniensteuerungsantwortnachricht die Richtlinienregel trägt.

10. Kommunikationsverfahren nach Anspruch 9, wobei das Erhalten, durch die zweite Richtliniensteuerungseinheit (202), von URSP-Richtlinieninformationen basierend auf den URSP-Identifikationsinformationen eines der Folgenden umfasst:
Erhalten, durch die zweite Richtliniensteuerungseinheit (202), der URSP-Richtlinieninformationen von einer ersten Richtliniensteuerungseinheit basierend auf den URSP-Identifikationsinformationen; und
Erhalten, durch die zweite Richtliniensteuerungseinheit (202), der URSP-Richtlinieninformationen von einem Netzspeichernetzelement basierend auf den URSP-Identifikationsinformationen.

11. Kommunikationsverfahren nach einem der Ansprüche 9 bis 10, wobei die URSP-Identifikationsinformationen eine URSP-Regelkennung sind und die URSP-Richtlinieninformationen Verkehrsdeskriptorinformationen, die einer URSP-Regel entsprechen, die durch die URSP-Regelkennung identifiziert wird, und eine oder mehrere Routenauswahldeskriptor(RSD)-Informationen umfassen.

12. Kommunikationsverfahren nach einem der Ansprüche 9 bis 11, wobei die URSP-Identifikationsinformationen Verkehrsdeskriptorinformationen sind und die URSP-Richtlinieninformationen eine oder mehrere RSD-Informationen, die den Verkehrsdeskriptorinformationen entsprechen, umfassen.

13. Vorrichtung, die Mittel umfasst, die konfiguriert sind, um die Schritte des Kommunikationsverfahrens nach einem der Ansprüche 1 bis 12 durchzuführen.

14. Kommunikationssystem, das ein Mobilitätsverwaltungsnetzelement (101) und ein Sitzungsverwaltungsnetzelement (102, 201) umfasst, wobei
das Mobilitätsverwaltungsnetzelement (101) konfiguriert ist, um URSP-Richtlinieninformationen von einer ersten Richtliniensteuerungseinheit basierend auf Benutzerroutenauswahlrichtlinien(URSP)-Identifikationsinformationen zu erhalten, wobei die URSP-Identifikationsinformationen in einer ersten Sitzungsanforderungsnachricht von einem Endgerät getragen werden;
das Mobilitätsverwaltungsnetzelement (101) ferner konfiguriert ist, um eine zweite Sitzungsanforderungsnachricht an das Sitzungsverwaltungsnetzelement (102, 201) zu senden, wobei die zweite Sitzungsanforderungsnachricht die URSP-Richtlinieninformationen trägt;
das Sitzungsverwaltungsnetzelement (102, 201) konfiguriert ist, um die zweite Sitzungsanforderungsnachricht zu empfangen; und
das Sitzungsverwaltungsnetzelement (102, 201) ferner konfiguriert ist, um eine Richtliniensteuerungsanforderungsnachricht an eine zweite Richtliniensteuerungseinheit (202) zu senden, wobei die Richtliniensteuerungsanforderungsnachricht die URSP-Richtlinieninformationen trägt und die URSP-Richtlinieninformationen verwendet werden, um eine Richtlinienregel für das Endgerät durch die zweite Richtliniensteuerungseinheit (202) zu formulieren.

15. Kommunikationssystem nach Anspruch 14, das ferner die zweite Richtliniensteuerungseinheit (202) umfasst, wobei
die zweite Richtliniensteuerungseinheit (202) konfiguriert ist, um die Richtliniensteuerungsanforderungsnachricht von dem Sitzungsverwaltungsnetzelement (102, 201) zu empfangen, wobei die Richtliniensteuerungsanforderungsnachricht die URSP-Identifikationsinformationen trägt;
die zweite Richtliniensteuerungseinheit (202) ferner konfiguriert ist, um die URSP-Richtlinieninformationen basierend auf den URSP-Identifikationsinformationen zu erhalten; die zweite Richtliniensteuerungseinheit (202) ferner konfiguriert ist, um eine Richtliniensteuerungsantwortnachricht an das Sitzungsverwaltungsnetzelement (102, 201) zu senden, wobei die Richtliniensteuerungsantwortnachricht die Richtlinienregel trägt; und das Sitzungsverwaltungsnetzelement (102, 201) ferner konfiguriert ist, um die Richtliniensteuerungsantwortnachricht von der zweiten Richtliniensteuerungseinheit (202) zu empfangen.

## Revendications

1. Procédé de communications, comprenant :
la réception, par un élément de réseau de gestion de mobilité (101), d'un premier message de demande de session en provenance d'un terminal, dans lequel le premier message de demande de session transporte des informations d'identification d'une politique de sélection dl'itinéraire d'utilisateur, URSP ;
l'obtention, par l'élément de réseau de gestion de mobilité (101), d'informations de politique URSP à partir d'une première entité de commande de politique sur la base des informations d'identification URSP ; et
l'envoi, par l'élément de réseau de gestion de mobilité (101), d'un second message de demande de session à un élément de réseau de gestion de session (102, 201), dans lequel le second message de demande de session porte les informations de politique URSP, et les informations de politique URSP doivent être utilisées pour formuler une règle de politique pour le terminal par une seconde entité de commande de politique (202).

2. Procédé de communications selon la revendication 1, dans lequel les informations d'identification URSP sont des informations de descripteur de trafic, et les informations de politique URSP comprennent un ou plusieurs éléments d'information de descripteur de sélection d'itinéraire, RSD, correspondant aux informations de descripteur de trafic.

3. Procédé de communications selon la revendication 1, dans lequel les informations d'identification URSP sont un identifiant de règle URSP, et les informations de politique URSP comprennent les informations de descripteur de trafic correspondant à une règle URSP identifiée par l'identifiant de règle URSP, et un ou plusieurs éléments d'information RSD.

4. Procédé de communications selon la revendication 1, dans lequel les informations d'identification URSP comprennent un ou plusieurs des éléments suivants : un nom de réseau de données, DNN, des informations d'assistance à la sélection d'une tranche de réseau unique, S-NSSAI, un mode de continuité de session et de service, SSC, un type de session et un type d'accès, et les informations de politique URSP comprennent un ou plusieurs éléments d'information de descripteur de trafic correspondant aux informations d'identification URSP.

5. Procédé de communications, comprenant :
la réception, par un élément de réseau de gestion de session (102, 201), d'un second message de demande de session provenant d'un élément de réseau de gestion de mobilité (101), dans lequel le second message de demande de session transporte des informations de politique URSP ;
la détermination, par l'élément de réseau de gestion de session (102, 201), sur la base des informations de politique URSP, d'accepter le second message de demande de session ; et
l'envoi, par l'élément de réseau de gestion de session (102, 201), d'un message de demande de commande de politique à une seconde entité de commande de politique (202), dans lequel le message de demande de commande de politique transporte les informations de politique URSP, et les informations de politique URSP doivent être utilisées pour formuler une règle de politique pour un terminal par la seconde entité de commande de politique (202).

6. Procédé de communications selon la revendication 5, dans lequel les informations de politique URSP comprennent un ou plusieurs des éléments suivants : informations de descripteur de trafic et un ou plusieurs éléments d'informations de descripteur de sélection d'itinéraire, RSD, correspondant aux informations de descripteur de trafic.

7. Procédé de communications selon la revendication 5 ou 6, dans lequel le second message de demande de session transporte en outre des informations de configuration de session ; et
la détermination, par l'élément de réseau de gestion de session (102, 201) sur la base des informations de politique URSP, d'accepter le second message de demande de session comprend :
la détermination, par l'élément de réseau de gestion de session (102, 201), du fait que les informations de configuration de session correspondent aux informations de politique URSP.

8. Procédé de communications selon l'une quelconque des revendications 5 à 7, dans lequel le second message de demande de session transporte en outre des informations d'identification URSP, et dans lequel les informations d'identification URSP comprennent un ou plusieurs des éléments suivants : un identificateur de règle URSP, des informations de descripteur de trafic, un nom de réseau de données, DNN, des informations d'assistance à la sélection d'une tranche de réseau unique, S-NSSAI, un mode de continuité de session et de service, SSC, un type de session, et un type d'accès.

9. Procédé de communications, comprenant :
la réception, par une seconde entité de commande de politique (202), d'un message de demande de commande de politique provenant d'un élément de réseau de gestion de session (102, 201), dans lequel le message de demande de commande de politique transporte des informations d'identification URSP ;
l'obtention, par la seconde entité de commande de politique (202), d'informations de politique URSP sur la base des informations d'identification URSP, dans lequel les informations de politique URSP sont utilisées pour formuler une règle de politique pour un terminal ; et
l'envoi, par la seconde entité de commande de politique (202), d'un message de réponse de commande de politique à l'élément de réseau de gestion de session (102, 201), dans lequel le message de réponse de commande de politique transporte la règle de politique.

10. Procédé de communications selon la revendication 9, dans lequel l'obtention, par la seconde entité de commande de politique (202), d'informations de politique URSP sur la base des informations d'identification URSP comprend l'un des éléments suivants :
l'obtention, par la seconde entité de commande de politique (202), des informations de politique URSP à partir d'une première entité de commande de politique, sur la base des informations d'identification URSP ; et
l'obtention, par la seconde entité de commande de politique (202), des informations de politique URSP à partir d'un élément de réseau de stockage sur la base des informations d'identification URSP.

11. Procédé de communications selon l'une quelconque des revendications 9 à 10, dans lequel les informations d'identification URSP sont un identifiant de règle URSP, et les informations de politique URSP comprennent des informations de descripteur de trafic correspondant à une règle URSP identifiée par l'identifiant de règle URSP, et un ou plusieurs éléments d'information de descripteur de sélection de route, RSD.

12. Procédé de communications selon l'une quelconque des revendications 9 à 11, dans lequel les informations d'identification URSP sont des informations de descripteur de trafic, et les informations de politique URSP comprennent un ou plusieurs éléments d'information RSD correspondant aux informations de descripteur de trafic.

13. Dispositif, comprenant un moyen configuré pour effectuer les étapes d'un procédé de communications selon l'une quelconque des revendications 1 à 12.

14. Système de communications, comprenant un élément de réseau de gestion de mobilité (101) et un élément de réseau de gestion de session (102, 201), dans lequel l'élément de réseau de gestion de mobilité (101) est configuré pour obtenir des informations de politique URSP à partir d'une première entité de commande de politique sur la base d'informations d'identification d'une politique de sélection d'itinéraire d'utilisateur, URSP, dans lequel les informations d'identification URSP sont transportées dans un premier message de demande de session provenant d'un terminal ;
l'élément de réseau de gestion de mobilité (101) est en outre configuré pour envoyer un second message de demande de session à l'élément de réseau de gestion de session (102, 201), dans lequel le second message de demande de session transporte les informations de politique URSP ;
l'élément de réseau de gestion de session (102, 201) est configuré pour recevoir le second message de demande de session ; et
l'élément de réseau de gestion de session (102, 201) est en outre configuré pour envoyer un message de demande de commande de politique à une seconde entité de commande de politique (202), dans lequel le message de demande de commande de politique transporte les informations de politique URSP, et les informations de politique URSP sont utilisées pour formuler une règle de politique pour le terminal par la seconde entité de commande de politique (202).

15. Système de communications selon la revendication 14, comprenant en outre la seconde entité de commande de politique (202), dans lequel
la seconde entité de commande de politique (202) est configurée pour recevoir le message de demande de commande de politique à partir de l'élément de réseau de gestion de session (102, 201), dans lequel le message de demande de commande de politique transporte les informations d'identification URSP ;
la seconde entité de commande de politique (202) est en outre configurée pour obtenir les informations de politique URSP sur la base des informations d'identification de l'URSP ;
la seconde entité de commande de politique (202) est en outre configurée pour envoyer un message de réponse de commande de politique à l'élément de réseau de gestion de session (102, 201), dans lequel le message de réponse de commande de politique transporte la règle de politique ; et
l'élément de réseau de gestion de session (102, 201) est en outre configuré pour recevoir le message de réponse de commande de politique à partir de la seconde entité de commande de politique (202).
